(19) Europäisches Patentamt
European Patent Office
Office européen des brevets

(11) EP 4 513 812 A1

(12) EUROPEAN PATENT APPLICATION
published in accordance with Art. 153(4) EPC

(43) Date of publication:
26.02.2025 Bulletin 2025/09

(51) International Patent Classification (IPC):
H04L 5/00 (2006.01)    H04B 7/0452 (2017.01)
H04W 72/23 (2023.01)

(21) Application number: 23792233.1

(22) Date of filing: 21.04.2023

(52) Cooperative Patent Classification (CPC):
H04B 7/0452; H04L 5/00; H04W 72/23

(86) International application number:
PCT/KR2023/005443

(87) International publication number:
WO 2023/204659 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.04.2022 KR 20220050198

(71) Applicant: LG Electronics Inc.
Yeongdeungpo-gu
Seoul 07336 (KR)

(72) Inventors:
• JEONG, Chanho
  Seoul 06772 (KR)
• KIM, Hyungtae
  Seoul 06772 (KR)
• KANG, Jiwon
  Seoul 06772 (KR)

(74) Representative: Plasseraud IP
104 Rue de Richelieu
CS92104
75080 Paris Cedex 02 (FR)

(54) METHOD FOR RECEIVING DEMODULATION REFERENCE SIGNAL IN WIRELESS COMMUNICATION SYSTEM, AND APPARATUS THEREFOR

(57) An operating method of a UE in a wireless communication system, according to an embodiment of the present specification, comprises the steps of: receiving DM-RS configuration information from a base station (BS); wherein the DM-RS configuration information comprises (i) information related to a plurality of first DM-RS symbols including one first FL DM-RS symbol and at least one first additional DM-RS symbol, (ii) information about whetherTDM is configured for the at least one first additional DM-RS symbol, and (iii) information about one specific DM-RS symbol from among the plurality of first DM-RS symbols; determining at least one second DM-RS symbol including the specific DM-RS symbol on the basis of the DM-RS configuration information; and receiving, from the BS, a first DM-RS only for the at least one second DM-RS symbol from among the plurality of first DM-RS symbols, wherein the first DM-RS is TDMed with a second DM-RS related to third DM-RS symbols other than the at least one second DM-RS symbol from among the plurality of first DM-RS symbols.

[FIG. 16]

**Description**

[TECHNICAL FIELD]

The present disclosure relates to a method for receiving a demodulation reference signal in a wireless communication system, and an apparatus therefor.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

[DISCLOSURE]

[TECHNICAL PROBLEM]

The present disclosure provides a method for receiving a demodulation reference signal in a wireless communication system, and an apparatus therefor.

The present disclosure also provides a method for receiving a demodulation reference signal in a multi-user-multi-input multi-output scenario, and an apparatus therefor.

The present disclosure also provides a method for multiplexing demodulation reference signals received by terminals in the multi-user-multi-input multi-output scenario, in a time domain, and an apparatus therefor.

The technical objects of the present disclosure are not limited to the aforementioned technical objects, and other technical objects, which are not mentioned above, will be apparently appreciated by a person having ordinary skill in the art from the following description.

[TECHNICAL SOLUTION]

In one aspect of the present disclosure, there is provided an operating method of a user equipment (UE) in a wireless communication system, the method comprising receiving demodulation reference signal (DM-RS) configuration information from a base station (BS), wherein the DM-RS configuration information comprises (i) information related to a plurality of first DM-RS symbols including one first front-loaded (FL) DM-RS symbol and at least one first additional DM-RS symbol, (ii) information about whether time division multiplexing (TDM) is configured for the at least one first additional DM-RS symbol, and (iii) information about one specific DM-RS symbol from among the plurality of first DM-RS symbols; determining at least one second DM-RS symbol including the specific DM-RS symbol on the basis of the DM-RS configuration information; and receiving, from the BS, a first DM-RS only for the at least one second DM-RS symbol from among the plurality of first DM-RS symbols, wherein the first DM-RS is TDMed with a second DM-RS related to third DM-RS symbols other than the at least one second DM-RS symbol from among the plurality of first DM-RS symbols.

The at least one second DM-RS symbol may further include one second additional DM-RS symbol different from the specific DM-RS symbol among the at least one first additional DM-RS symbol.

The specific DM-RS symbol among the at least one second DM-RS symbol may be an FL DM-RS symbol for the second additional DM-RS symbol.

The second additional DM-RS symbol among the at least one second DM-RS symbol may be an additional DM-RS symbol for the specific DM-RS symbol.

The DM-RS configuration information may be UE-specific information, and the UE may be configured to receive a DM-RS in a different DMRS symbol from at least one other UE serviced from the BS. The at least one other UE may be configured to receive a DM-RS in at least one of the third DM-RS symbols from the BS, and the at least one second DM-RS symbol and the third DM-RS symbols may be associated with different orthogonal DM-RS ports.

The DMRS configuration information may be received by a radio resource control (RRC) message, downlink control information (DCI), or a medium access control-control element (MAC-CE).

The DM-RS configuration information may further include information of a DM-RS configuration type. When the DM-RS configuration type is configured to type 1, (i) the at least one second DM-RS symbol and (ii) at the third DM-RS symbols may be associated with 4 or 8 orthogonal DM-RS ports, respectively. When the DM-RS configuration type is configured to type 2, (i) the at least one second DM-RS symbol and (ii) at the third DM-RS symbols may be associated with 6 or 12 orthogonal DM-RS ports, respectively.

In another aspect of the present disclosure, there is provided an operating method for a base station (BS) in a wireless communication system, the method comprising transmitting demodulation reference signal (DM-RS) configuration information from a user equipment (UE), wherein the DM-RS configuration information comprises (i) information related to a plurality of first DM-RS symbols including one first front-loaded (FL) DM-RS symbol and at least one first additional DM-RS symbol, (ii) information about whether time division multiplexing (TDM) is configured for the at least one first additional DM-RS symbol, and (iii) information about one specific DM-RS symbol from among the plurality of first DM-RS symbols; and transmitting, to the UE, a first DM-RS only in at least one second DM-RS symbol from among the plurality of first DM-RS symbols, wherein the at least one second DM-RS symbol includes the specific DM-RS symbol based on the DM-RS configuration information, and wherein the first DM-RS is TDMed with a second DM-RS related to third DM-RS symbols other than the at least one second DM-RS symbol from among the plurality of first DM-RS symbols.

The at least one second DM-RS symbol may further include one second additional DM-RS symbol different from the specific DM-RS symbol among the at least one first additional DM-RS symbol.

The specific DM-RS symbol among the at least one second DM-RS symbol may be an FL DM-RS symbol for the second additional DM-RS symbol.

The second additional DM-RS symbol among the at least one second DM-RS symbol may be an additional DM-RS symbol for the specific DM-RS symbol.

The DM-RS configuration information may be UE-specific information, and the UE may be configured to receive a DM-RS in a different DMRS symbol from at least one other terminal serviced from the BS. The at least one other UE may be configured to receive a DM-RS in at least one of the third DM-RS symbols from the BS, and the at least one second DM-RS symbol and the third DM-RS symbols may be associated with different orthogonal DM-RS ports.

The DMRS configuration information may be transmitted by a radio resource control (RRC) message, downlink control information (DCI), or a medium access control-control element (MAC-CE).

The DM-RS configuration information may further include information of a DM-RS configuration type. When the DM-RS configuration type is configured to type 1, (i) the at least one second DM-RS symbol and (ii) at the third DM-RS symbols may be associated with 4 or 8 orthogonal DM-RS ports, respectively. When the DM-RS configuration type is configured to type 2, (i) the at least one second DM-RS symbol and (ii) at the third DM-RS symbols may be associated with 6 or 12 orthogonal DM-RS ports, respectively.

The present disclosure provides a user equipment (UE) in a wireless communication system comprising a transceiver, at least one processor, and at least one memory operably connectable to the at least one processor, and storing instructions of performing operations when executed by the at least one processor, wherein the operations include all steps according to the technical solution by the UE described above.

The present disclosure provides a base station (BS) in a wireless communication system comprising a transceiver, at least one processor, and at least one memory operably connectable to the at least one processor, and storing instructions of performing operations when executed by the at least one processor, wherein the operations include all steps according to the technical solution by the base station described above.

The present disclosure provides a control device of controlling a user equipment (UE) in a wireless communication system comprising at least one processor and at least one memory operably accessing the at least one processor, wherein the at least one memory stores instructions for performing operations based on being executed by the at least one processor, and wherein the operations include all steps according to the technical solution by the UE described above.

The present disclosure provides a control device of controlling a base station (BS) in a wireless communication system comprising at least one processor and at least one memory operably accessing the at least one processor, wherein the at least one memory stores instructions for performing operations based on being executed by the at least one processor, and wherein the operations all steps according to the technical solution by the base station described above.

The present disclosure provides one or more non-transitory computer readable media storing one or more instructions, wherein the one or more instructions perform operations based on being executed by one or more processors, and wherein the operations all steps according to the technical solution by the UE described above.

The present disclosure provides one or more non-transitory computer readable media storing one or more instructions, wherein the one or more instructions perform operations based on being executed by one or more processors, and wherein the operations include all steps according to the technical solution by the base station described above.

[ADVANTAGEOUS EFFECTS]

According to the present disclosure, there is an effect in that a downlink demodulation reference signal in a wireless communication system can be received.

Further, according to the present disclosure, there is an effect in that a demodulation reference signal in a multi-user-multi-input multi-output scenario can be received in the wireless communication system.

Further, according to the present disclosure, there is an effect in that demodulation reference signals received by terminals in the multi-user-multi-input multi-output scenario can be multiplexed in a time domain in the wireless communication system.

Further, according to the present disclosure, there is an effect in that the demodulation reference signal can be supported to the terminals of the multi-user-multi-input multi-output scenario without increase of demodulation reference signal overhead.

Effects which may be obtained by the present disclosure are not limited to the aforementioned effects, and other technical effects not described above may be evidently understood by a person having ordinary skill in the art to which the present disclosure pertains from the following description.

[BRIEF DESCRIPTION OF THE DRAWINGS]

The accompanying drawings, which are included to provide a further understanding of the present disclosure and constitute a part of the detailed description, illustrate embodiments of the present disclosure and together with the description serve to explain the principle of the present disclosure.

FIG. 1 is a diagram illustrating an example of an overall system structure of NR to which a method proposed in the present disclosure is applicable.
FIG. 2 illustrates a relationship between an uplink frame and a downlink frame in a wireless communication system to which a method proposed by the present disclosure is applicable.
FIG. 3 illustrates an example of a frame structure in an NR system.
FIG. 4 illustrates an example of a resource grid supported by a wireless communication system to which a method proposed in the present disclosure is applicable.
FIG. 5 illustrates examples of a resource grid for each antenna port and numerology to which a method proposed in the present disclosure is applicable.
FIG. 6 illustrates physical channels and general signal transmission used in a 3GPP system.
FIG. 7 is a flowchart showing an example of a method proposed by the present disclosure.
FIG. 8 is a diagram illustrating an example of downlink DMRS transmission.
FIG. 9 is a diagram illustrating another example of the downlink DMRS transmission.
FIG. 10 is a diagram illustrating yet another example of the downlink DMRS transmission.
FIG. 11 is a diagram illustrating still yet another example of the downlink DMRS transmission.
FIG. 12 is a diagram illustrating still yet another example of the downlink DMRS transmission.
FIG. 13 is a diagram illustrating still yet another example of the downlink DMRS transmission.
FIG. 14 is a diagram illustrating still yet another example of the downlink DMRS transmission.
FIG. 15 is a diagram illustrating still yet another example of the downlink DMRS transmission.
FIG. 16 is a flowchart showing an example in which a method proposed by the present disclosure is performed by a UE.
FIG. 17 is a flowchart showing an example in which the method proposed by the present disclosure is performed by a BS.
FIG. 18 is a diagram illustrating configurations of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11(Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

For clarity of description, the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a standard document detail number. The LTE/NR may be collectively referred to as the 3GPP system. Matters disclosed in a standard document published before the present disclosure may refer to a background art, terms, abbreviations, etc., used for describing the present disclosure. For example, the following documents may be referenced.

3GPP LTE

     36.211: Physical channels and modulation
     36.212: Multiplexing and channel coding
     36.213: Physical layer procedures
     36.300: Overall description
     36.331: Radio Resource Control (RRC)

3GPP NR

     38.211: Physical channels and modulation
     38.212: Multiplexing and channel coding
     38.213: Physical layer procedures for control
     38.214: Physical layer procedures for data
     38.300: NR and NG-RAN Overall Description
     36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. As such, the introduction of next-generation radio access technology considering enhanced mobile broadband communication (eMBB), massive MTC (mMTC), ultra-reliable and low latency communication (URLLC) is discussed, and in the present disclosure, the technology is called NR for convenience. The NR is an expression representing an example of 5G radio access technology (RAT).

In a New RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. By scaling a reference subcarrier spacing by an integer N, different numerologies may be defined.

Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network defined by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used at an NG2 reference point between new RAN and NGC.

NG-U: A user plane interface used at an NG3 reference point between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: An end point of NG-U interface.

Overview of system

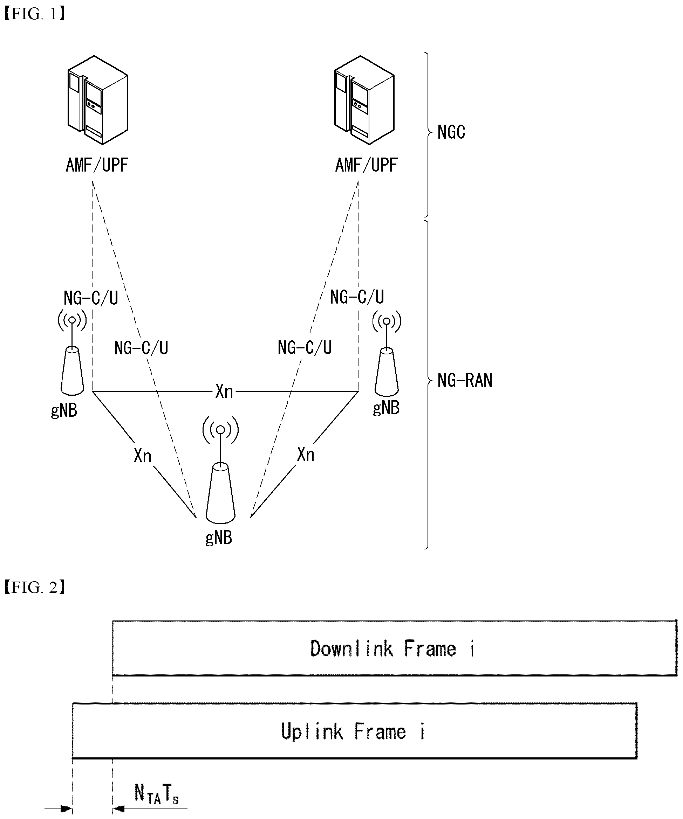

FIG. 1 illustrates an example overall NR system structure to which a method as proposed in the disclosure may apply.

Referring to FIG. 1, an NG-RAN is constituted of gNBs to provide a control plane (RRC) protocol end for user equipment (UE) and NG-RA user plane (new AS sublayer/PDCP/RLC/MAC/PHY).

The gNBs are mutually connected via an Xn interface.

The gNBs are connected to the NGC via the NG interface.

More specifically, the gNB connects to the access and mobility management function (AMF) via the N2 interface and connects to the user plane function (UPF) via the N3 interface.

New RAT (NR) numerology and frame structure

In the NR system, a number of numerologies may be supported. Here, the numerology may be defined by the subcarrier spacing and cyclic prefix (CP) overhead. At this time, multiple subcarrier spacings may be derived by scaling the basic subcarrier spacing by integer N (or, $\mu$). Further, although it is assumed that a very low subcarrier spacing is not used at a very high carrier frequency, the numerology used may be selected independently from the frequency band.

Further, in the NR system, various frame structures according to multiple numerologies may be supported.

Hereinafter, an orthogonal frequency division multiplexing (OFDM) numerology and frame structure that may be considered in the NR system is described.

The multiple OFDM numerologies supported in the NR system may be defined as shown in Table 1.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

NR supports multiple numerologies (or subcarrier spacings (SCS)) for supporting various 5G services. For example, if SCS is 15 kHz, NR supports a wide area in typical cellular bands. If SCS is 30 kHz/60 kHz, NR supports a dense urban, lower latency and a wider carrier bandwidth. If SCS is 60 kHz or higher, NR supports a bandwidth greater than 24.25 GHz in order to overcome phase noise.

An NR frequency band is defined as a frequency range of two types FR1 and FR2. The FR1 and the FR2 may be configured as in Table 1 below. Furthermore, the FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

With regard to the frame structure in the NR system, the size of various fields in the time domain is expressed as a multiple of time unit of $T_s = 1/(\Delta f_{max} \cdot N_f)$, where $\Delta f_{max} = 480 \cdot 10^3$, and $N_f = 4096$. Downlink and uplink transmissions is constituted of a radio frame with a period of $T_f = (\Delta f_{max} N_f/100) \cdot T_s = 10$ ms. Here, the radio frame is constituted of 10 subframes each of which has a period of $T_{sf} = (\Delta f_{max} N_f/1000) \cdot T_s = 1$ ms. In this case, one set of frames for uplink and one set of frames for downlink may exist.

FIG. 2 illustrates a relationship between an uplink frame and downlink frame in a wireless communication system to which a method described in the present disclosure is applicable.

As illustrated in FIG. 2, uplink frame number i for transmission from the user equipment (UE) should begin $T_{TA} = N_{TA}T_s$ earlier than the start of the downlink frame by the UE.

For numerology $\mu$, slots are numbered in ascending order of $n_s^\mu \in \left\{0,\ldots, N_{subframe}^{slots,\mu} - 1\right\}$ in the subframe and in ascending order of $n_{s,f}^\mu \in \left\{0,\ldots, N_{frame}^{slots,\mu} - 1\right\}$ in the radio frame. One slot includes consecutive OFDM symbols of $N_{symb}^\mu$, and $N_{symb}^\mu$ is determined according to the used numerology and slot configuration. In the subframe, the start of slot $n_s^\mu$ is temporally aligned with the start of $n_s^\mu N_{symb}^\mu$.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame,\mu}$ of slots per radio frame, and the number $N_{slot}^{subframe,\mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

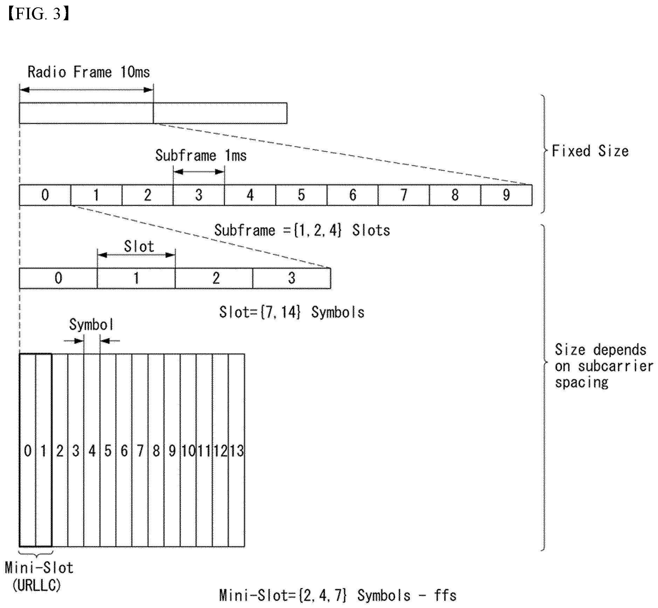

FIG. 3 illustrates an example of a frame structure in a NR system. FIG. 3 is merely for convenience of explanation and does not limit the scope of the present disclosure.

In Table 4, in case of $\mu=2$, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

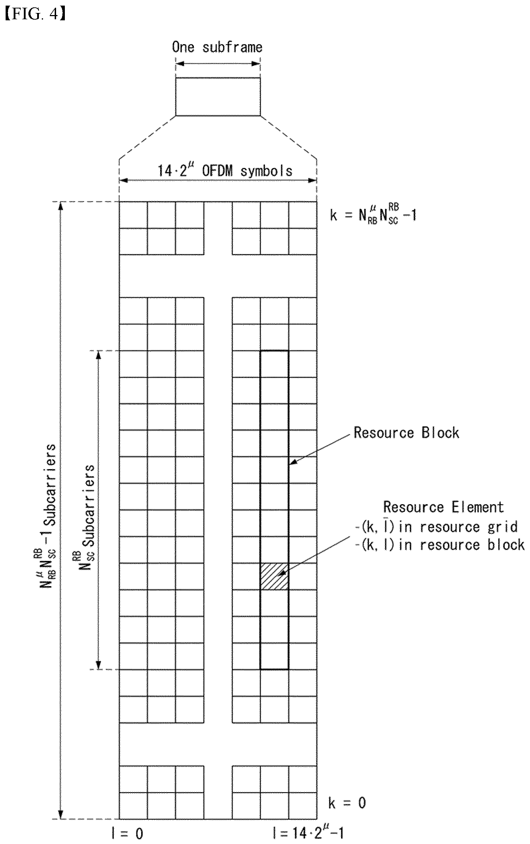

FIG. 4 illustrates an example of a resource grid supported in a wireless communication system to which a method proposed in the present disclosure is applicable.

Referring to FIG. 4, a resource grid consists of $N_{\mathrm{RB}}^{\mu} N_{\mathrm{sc}}^{\mathrm{RB}}$ subcarriers on a frequency domain, each subframe consisting of $14 \cdot 2\mu$ OFDM symbols, but the present disclosure is not limited thereto.

In the NR system, a transmitted signal is described by one or more resource grids, consisting of $N_{\mathrm{RB}}^{\mu} N_{\mathrm{sc}}^{\mathrm{RB}}$ subcarriers, and $2^{\mu} N_{\mathrm{symb}}^{(\mu)}$ OFDM symbols, where $N_{\mathrm{RB}}^{\mu} \leq N_{\mathrm{RB}}^{\max,\mu}$. $N_{\mathrm{RB}}^{\max,\mu}$ denotes a maximum transmission bandwidth and may change not only between numerologies but also between uplink and downlink.

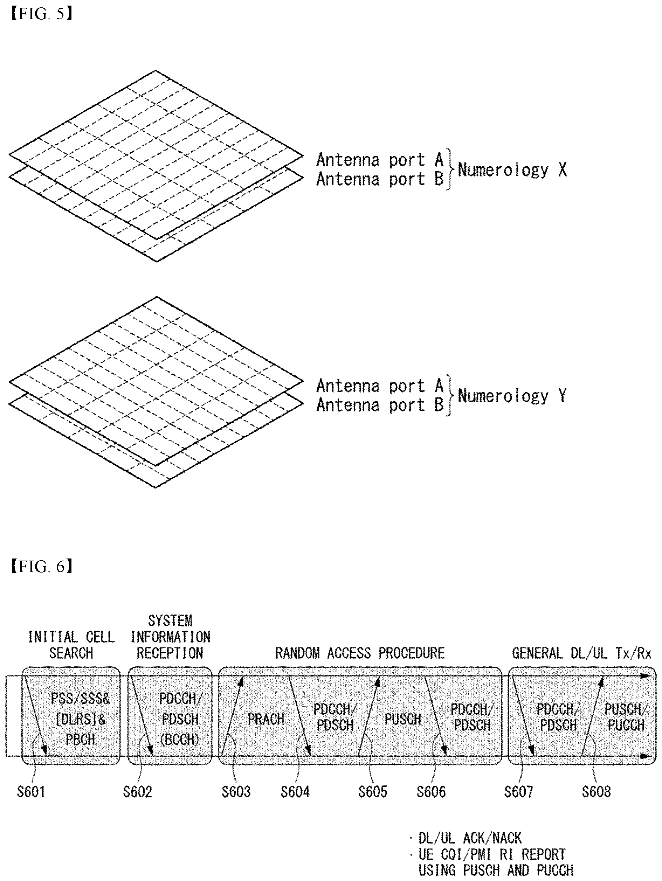

In this case, as illustrated in FIG. 5, one resource grid may be configured per numerology $\mu$ and antenna port p.

FIG. 5 illustrates examples of a resource grid per antenna port and numerology to which a method proposed in the present disclosure is applicable.

Each element of the resource grid for the numerology $\mu$ and the antenna port p is called a resource element and is uniquely identified by an index pair $(k,\bar{l})$, where $k = 0,...,N_{\mathrm{RB}}^{\mu} N_{\mathrm{sc}}^{\mathrm{RB}} - 1$ is an index on a frequency domain, and $\bar{l} = 0,...,2^{\mu} N_{\mathrm{symb}}^{(\mu)} - 1$ refers to a location of a symbol in a subframe. The index pair $(k,\bar{l})$ is used to refer to a resource element in a slot, where $l = 0,...,N_{\mathrm{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{\mathrm{sc}}^{\mathrm{RB}} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN).

The common resource blocks are numbered from 0 and upwards in the frequency domain for subcarrier spacing configuration $\mu$.

The center of subcarrier 0 of common resource block 0 for the subcarrier spacing configuration $\mu$ coincides with 'point A'. A common resource block number $n_{\mathrm{CRB}}^{\mu}$ in the frequency domain and resource elements (k, l) for the subcarrier spacing configuration $\mu$ may be given by the following Equation 1.

【Equation 1】

$$n_{\mathrm{CRB}}^{\mu} = \left\lfloor \frac{k}{N_{\mathrm{sc}}^{\mathrm{RB}}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{\mathrm{BWP},i}^{\mathrm{size}} - 1$, where $i$ is No. Of the BWP. A relation between the physical resource block $n_{\mathrm{PRB}}$ in BWP $i$ and the common resource block $n_{\mathrm{CRB}}$ may be given by the following Equation 2.

【Equation 2】

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

Physical Channel and General Signal Transmission

FIG. 6 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

The base station described in this disclosure may be a generic term for an object that transmits/receives data to and from UE. For example, the base station described herein may be a concept including one or more transmission points (TPs), one or more transmission and reception points (TRPs), and the like. For example, multiple TPs and/or multiple TRPs described herein may be included in one base station or included in multiple base stations. In addition, the TP and/or TRP may include a panel of a base station, a transmission and reception unit, and the like.

In addition, the TRP described in this disclosure means an antenna array having one or more antenna elements available in a network located at a specific geographical location in a specific area. Although this disclosure is described with respect to "TRP" for convenience of explanation, the TRP may be replaced with a base station, a transmission point (TP), a cell (e.g., a macro cell/small cell/pico cell, etc.), an antenna array, or a panel and understood and applied as such.

A demodulation reference signal (DMRS) is a reference signal (RS) required to demodulate transmission data. The DMRS may be transmitted at a specific time and a specific bandwidth of a physical channel with data, and transmitted regardless of uplink (UL) or downlink (DL), and must also be considered when configuring power allocation. For example, by comparing transmission power and reception power of the RS, the degree of power attenuation in the channel may be known. That is, the degree at which power is attenuated in the channel may be measured by comparing the transmission power of the RS and the reception power of that RS. Further, if a channel condition deteriorates due to Doppler shift, Doppler spread, average delay, delay spread, spatial RX parameters, etc., the number of symbols of the DMRS may increase up to 4.

The present disclosure proposes a method for efficiently designing DMRS ports through TDM configuration of an additional DMRS in multi-user multi-input multi-output (MU-MIMO) transmission. That is, the method proposed by the present disclosure relates to a method for efficiently configuring the DMRS port through the TDM configuration for the additional DMRS during the MU-MIMO transmission.

<DMRS Configuration & Mapping Operation Description>

DMRS configuration types 1 & 2 which are two DMRS configuration types may be configured, and mapped to Mapping types A & B which are two mapping types. That is, when transmitting the DMRS, there may be two DMRS configuration types 1 & 2 and two DMRS mapping types A & B.

1) Configuration type: Type 1 is configured to a "dmrs-Type" which is one of two DMRS configuration types when a higher RS density is required in the frequency domain; Type 2 is configured to a "dmrs-Type" which is one of two DMRS configuration types when more antenna ports are required. That is, the DMRS configuration type may be configured to one of types 1 and 2 through the parameter "dmrs-Type", and type 1 may be configured when a higher RS density is required and type 2 may be configured when more antenna ports are required.

Table 5 below is a table in which the DMRS configuration type is summarized.

[Table 5]

| |
| --- |
| - Type 1: higher RS density in frequency domain<br>Maximum 4(8) ports for single(double)-symbol DMRS<br>Length 2 F-CDM and FDM for single-symbol DMRS (type 2 is also the same)<br>Length 2 F/T-CDM and FDM for double-symbol DMRS (type 2 is also the same)<br>- Type 2: more DMRS antenna ports<br>Maximum 6(12) ports for single(double)-symbol DMRS |

2) Mapping Type: When type A is slot-based, a first DMRS is located in symbols 2 to 3 immediately following the CORESET, which occupies symbols 1 to 2, and when type B is non-slot based, the DMRS is located in a first symbol. Since a mini-slot is used and a latency is valued, the DMRS is located in a frontmost symbol so that data decoding to come later may be quickly performed. That is, mapping type A is configured for slot-based transmission, and the first DMRS is located at symbol 2 or 3, immediately following the CORESET, which occupies 1 or 2 symbols. Mapping Type B is set for non-slot based transmission, and the first DMRS may be located at the frontmost symbol (the first symbol) for quick data decoding.

PDSCH mapping is based on PDSCH SLIV tables in Tables 6 and 7, and PUSCH mapping schedules the PUSCH SLIV table slots in Tables 8 and 9. That is, the PUSCH mapping may be performed by scheduling the PUSCH SLIV table slots in Tables 8 and 9.

[Table 6]

| |
| --- |
| Type A :<br>- PDSCH DMRS is Type A<br>- The DMRS location is fixed to 3rd (pos2) or 4th(pos3)<br>- PDSCH Starting Symbol can be 0~3<br>- PDSCH Length can be 3-14 in case of normal CP and 3~12 in case of extended CP |

(continued)

| Type A : |
|---|
| - the DMRS symbol can start only at symbol 2 or 3 regardless of PDSCH start and length. It implies this cannot be used when PDSCH start symbol is greater than 3. This is related to the row 'Type A' in PDSCH SLIV table. This type is used for slot based scheduling. |
| Type B : <br> - PDSCH DMRS is Type B <br> - The DMRS location is fixed to the first symbol of the allocated PDSCH <br> - PDSCH Starting Symbol can be 0~12 in case of Normal CP and 0~10 in case of extended CP <br> - PDSCH Length can only be 2 or 4 or 7 in case of Normal CP and 2 or 4 or 6 in case of extended CP <br> - The DMRS symbol can start at the first PDSCH symbol regardless of PDSCH start. This is related to the row 'Type B' in PDSCH SLIV table. This type is used for mini-slot based scheduling |

[Table 7]

| PDSCH mapping type | Normal cyclic prefix | | | Extended cyclic prefix | | |
|---|---|---|---|---|---|---|
| | *S* | *L* | *S+L* | *S* | *L* | *S+L* |
| Type A | {0,1,2,3} (Note 1) | {3,...,14} | {3,...,14} | {0,1,2,3} (Note 1) | {3,...,12} | {3,...,12} |
| Type B | {0,...,12} | {2,...,13} | {2,...,14} | {0,...,10} | {2,4,6} | {2,...,12} |
| Note 1: S = 3 is applicable only if *dmrs-TypeA-Postion* = 3 | | | | | | |

[Table 8]

| Type A : <br> - PUSCH DMRS is Type A <br> - The DMRS location is fixed to 3rd (pos2) or 4th(pos3) <br> - PUSCH Starting Symbol is always 0 <br> - PDSCH Length can be 4~14 in case of normal CP and 4-12 in case of extended CP |
|---|
| Type B : <br> - PUSCH DMRS is Type B <br> - The DMRS location is fixed to the first symbol of the allocated PUSCH <br> - PUSCH Starting Symbol can be 0~13 in case of Normal CP and 0-12 in case of extended CP <br> - PUSCH Length can only be 1~14 in case of Normal CP and 1~12 in case of extended CP |

[Table 9]

| PUSCH mapping type | Normal cyclic prefix | | | Extended cyclic prefix | | |
|---|---|---|---|---|---|---|
| | *S* | *L* | *S+L* | S | *L* | *S+L* |
| Type A (repetition Type A only) | 0 | {4,...,14} | {4,...,14} | 0 | {4,...,12} | {4,...,12} |
| Type B | {0,...,13} | {1,...,14} | {1,...,14} for repetition Type A. {1,...,27} for repetition Type B | {0,...,11} | {1,...,12} | {1,...,12} for repetition Type A, {1,...,23} for repetition Type B |

Each additional DMRS that is additionally configured may be configured for single/double and intra slot hopping in broadcast, multicast, and high-speed scenarios, etc. A frequency hopping situation must also be considered during uplink transmission.

Tables 10 to 13 relate to PDSCH DMRS configuration and mapping.

Table 10 shows parameters for DM-RS configuration type 1, and Table 11 shows parameters for DM-RS configuration type 2.

[Table 10]

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

[Table 11]

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

Further, Table 12 shows positions of single-symbol PDSCH DM-RS, and Table 13 shows positions of double-symbol PDSCH DM-RS.

[Table 12]

| $l_d$ in symbols | DM-RS positions $\bar{l}$ | | | | | | | |
|---|---|---|---|---|---|---|---|---|
| | PDSCH mapping type A | | | | PDSCH mapping type B | | | |
| | dmrs-AdditionalPosition | | | | dmrs-AdditionalPosition | | | |
| | pos0 | pos1 | pos2 | pos3 | pos0 | pos1 | pos2 | pos3 |
| 2 | - | - | - | - | $l_0$ | $l_0$ | $l_0$ | $l_0$ |
| 3 | $l_0$ | $l_0$ | $l_0$ | $l_0$ | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $l_0, 4$ | $l_0, 4$ | $l_0, 4$ |
| 6 | $l_0$ | $l_0$ | $l_0$ | $l_0$ | $l_0$ | $l_0, 4$ | $l_0, 4$ | $l_0, 4$ |
| 7 | $l_0$ | $l_0$ | $l_0$ | $l_0$ | $l_0$ | $l_0, 4$ | $l_0, 4$ | $l_0, 4$ |
| 8 | $l_0$ | $l_0, 7$ | $l_0, 7$ | $l_0, 7$ | $l_0$ | $l_0, 6$ | $l_0, 3, 6$ | $l_0, 3,6$ |

(continued)

| $l_d$ in symbols | DM-RS positions $\bar{l}$ | | | | | | | |
|---|---|---|---|---|---|---|---|---|
| | PDSCH mapping type A | | | | PDSCH mapping type B | | | |
| | dmrs-AdditionalPosition | | | | dmrs-AdditionalPosition | | | |
| | pos0 | pos1 | pos2 | pos3 | pos0 | pos1 | pos2 | pos3 |
| 9 | $l_0$ | $l_0, 7$ | $l_0, 7$ | $l_0, 7$ | $l_0$ | $l_0, 7$ | $l_0, 4, 7$ | $l_0, 4, 7$ |
| 10 | $l_0$ | $l_0, 9$ | $l_0, 6, 9$ | $l_0, 6, 9$ | $l_0$ | $l_0, 7$ | $l_0, 4, 7$ | $l_0, 4, 7$ |
| 11 | $l_0$ | $l_0, 9$ | $l_0, 6, 9$ | $l_0, 6, 9$ | $l_0$ | $l_0, 8$ | $l_0, 4, 8$ | $l_0, 3, 6, 9$ |
| 12 | $l_0$ | $l_0, 9$ | $l_0, 6, 9$ | $l_0, 5, 8, 11$ | $l_0$ | $l_0, 9$ | $l_0, 5, 9$ | $l_0, 3, 6, 9$ |
| 13 | $l_0$ | $l_0, l_1$ | $l_0, 7, 11$ | $l_0, 5, 8, 11$ | $l_0$ | $l_0, 9$ | $l_0, 5, 9$ | $l_0, 3, 6, 9$ |
| 14 | $l_0$ | $l_0, l_1$ | $l_0, 7, 11$ | $l_0, 5, 8, 11$ | - | - | - | - |

[Table 13]

| $l_d$ in symbols | DM-RS positions $\bar{l}$ | | | | | |
|---|---|---|---|---|---|---|
| | PDSCH mapping type A | | | PDSCH mapping type B | | |
| | dmrs-AdditionalPosition | | | dmrs-AdditionalPosition | | |
| | pos0 | pos1 | pos2 | pos0 | pos1 | pos2 |
| <4 | | | | - | - | |
| 4 | $l_0$ | $l_0$ | | - | - | |
| 5 | $l_0$ | $l_0$ | | $l_0$ | $l_0$ | |
| 6 | $l_0$ | $l_0$ | | $l_0$ | $l_0$ | |
| 7 | $l_0$ | $l_0$ | | $l_0$ | $l_0$ | |
| 8 | $l_0$ | $l_0$ | | $l_0$ | $l_0, 5$ | |
| 9 | $l_0$ | $l_0$ | | $l_0$ | $l_0, 5$ | |
| 10 | $l_0$ | $l_0, 8$ | | $l_0$ | $l_0, 7$ | |
| 11 | $l_0$ | $l_0, 8$ | | $l_0$ | $l_0, 7$ | |
| 12 | $l_0,$ | $l_0, 8$ | | $l_0$ | $l_0, 8$ | |
| 13 | $l_0$ | $l_0, 10$ | | $l_0$ | $l_0, 8$ | |
| 14 | $l_0$ | $l_0, 10$ | | - | - | |

Tables 14 to 18 relate to PUSCH DMRS configuration and mapping.

Table 14 shows parameters for DM-RS configuration type 1, and Table 15 shows parameters for DM-RS configuration type 2.

[Table 14]

| $\tilde{p}$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |

(continued)

| $\tilde{p}$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 7 | 1 | 1 | +1 | -1 | +1 | -1 |

[Table 15]

| $\tilde{p}$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

Further, Table 16 shows positions of the single-symbol PUSCH DM-RS within a slot in which intra-slot frequency hopping is disabled, Table 17 shows positions of the double-symbol PUSCH DM-RS within a slot in which the intra-slot frequency hopping is disabled, and Table 18 shows positions of the single-symbol PUSCH DM-RS within a slot in which the intra-slot frequency hopping is enabled.

[Table 16]

| $l_d$ in symbols | DM-RS positions $\bar{l}$ | | | | | | | |
|---|---|---|---|---|---|---|---|---|
| | PUSCH mapping type A | | | | PUSCH mapping type B | | | |
| | *dmrs-AdditionalPosition* | | | | *dmrs-AdditionalPosition* | | | |
| | *pos0* | *pos1* | *pos2* | *pos3* | *pos0* | *pos1* | *pos2* | *pos3* |
| <4 | - | - | - | - | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $l_0, 4$ | $l_0, 4$ | $l_0, 4$ |
| 6 | $l_0$ | $l_0$ | $l_0$ | $l_0$ | $l_0$ | $l_0, 4$ | $l_0, 4$ | $l_0, 4$ |
| 7 | $l_0$ | $l_0$ | $l_0$ | $l_0$ | $l_0$ | $l_0, 4$ | $l_0, 4$ | $l_0, 4$ |
| 8 | $l_0$ | $l_0, 7$ | $l_0, 7$ | $l_0, 7$ | $l_0$ | $l_0, 6$ | $l_0, 3, 6$ | $l_0, 3, 6$ |
| 9 | $l_0$ | $l_0, 7$ | $l_0, 7$ | $l_0, 7$ | $l_0$ | $l_0, 6$ | $l_0, 3, 6$ | $l_0, 3, 6$ |
| 10 | $l_0$ | $l_0, 9$ | $l_0, 6, 9$ | $l_0, 6, 9$ | $l_0$ | $l_0, 8$ | $l_0, 4, 8$ | $l_0, 3,6,9$ |
| 11 | $l_0$ | $l_0, 9$ | $l_0, 6, 9$ | $l_0, 6, 9$ | $l_0$ | $l_0, 8$ | $l_0, 4, 8$ | $l_0, 3, 6, 9$ |
| 12 | $l_0$ | $l_0, 9$ | $l_0, 6, 9$ | $l_0, 5, 8, 11$ | $l_0$ | $l_0, 10$ | $l_0, 5, 10$ | $l_0, 3, 6, 9$ |
| 13 | $l_0$ | $l_0, 11$ | $l_0, 7, 11$ | $l_0, 5, 8, 11$ | $l_0$ | $l_0, 10$ | $l_0, 5, 10$ | $l_0, 3, 6, 9$ |
| 14 | $l_0$ | $l_0, 11$ | $l_0, 7, 11$ | $l_0, 5, 8, 11$ | $l_0$ | $l_0, 10$ | $l_0, 5, 10$ | $l_0, 3, 6, 9$ |

[Table 17]

| $l_d$ in symbols | DM-RS positions $\bar{l}$ | | | | | | | |
| --- | --- | --- | --- | --- | --- | --- | --- | --- |
| | PUSCH mapping type A | | | | PUSCH mapping type B | | | |
| | *dmrs-AdditionalPosition* | | | | *dmrs-AdditionalPosition* | | | |
| | *pos0* | *pos1* | *pos2* | *pos3* | *pos0* | *pos1* | *pos2* | *pos3* |
| <4 | - | - | | | - | - | | |
| 4 | $l_0$ | $l_0$ | | | - | - | | |
| 5 | $l_0$ | $l_0$ | | | $l_0$ | $l_0$ | | |
| 6 | $l_0$ | $l_0$ | | | $l_0$ | $l_0$ | | |
| 7 | $l_0$ | $l_0$ | | | $l_0$ | $l_0$ | | |
| 8 | $l_0$ | $l_0$ | | | $l_0$ | $l_0$, 5 | | |
| 9 | $l_0$ | $l_0$ | | | $l_0$ | $l_0$, 5 | | |
| 10 | $l_0$ | $l_0$, 8 | | | $l_0$ | $l_0$, 7 | | |
| 11 | $l_0$ | $l_0$, 8 | | | $l_0$ | $l_0$, 1 | | |
| 12 | $l_0$ | $l_0$, 8 | | | $l_0$ | $l_0$, 9 | | |
| 13 | $l_0$ | $l_0$, 10 | | | $l_0$ | $l_0$, 9 | | |
| 14 | $l_0$ | $l_0$, 10 | | | $l_0$, | $l_0$, 9 | | |

[Table 18]

| $l_d$ in symbols | DM-RS positions $\bar{l}$ | | | | | | | | | | | |
| --- | --- | --- | --- | --- | --- | --- | --- | --- | --- | --- | --- | --- |
| | PUSCH mapping type A | | | | | | | | PUSCH mapping type B | | | |
| | $l_0 = 2$ | | | | $l_0, = 3$ | | | | $l_0, = 0$ | | | |
| | *dmrs-AdditionalPosition* | | | | *dmrs-AdditionalPosition* | | | | *dmrs-AdditionalPosition* | | | |
| | *pos0* | | *pos1* | | *pos0* | | *pos1* | | *pos0* | | *pos1* | |
| | 1st hop | 2nd hop | 1st hop | 2nd hop | 1st hop | 2nd hop | 1st hop | 2nd hop | 1st hop | 2nd hop | 1st hop | 2nd hop |
| ≤3 | - | - | - | - | - | - | - | - | 0 | 0 | 0 | 0 |
| 4 | 2 | 0 | 2 | 0 | 3 | 0 | 3 | 0 | 0 | 0 | 0 | 0 |
| 5, 6 | 2 | 0 | 2 | 0, 4 | 3 | 0 | 3 | 0, 4 | 0 | 0 | 0, 4 | 0, 4 |
| 7 | 2 | 0 | 2, 6 | 0, 4 | 3 | 0 | 3 | 0, 4 | 0 | 0 | 0, 4 | 0, 4 |

Two DMRS configuration types 1 and 2 are configured, and Type 1 is configured to a "dmrs-Type" which is one of two DMRS configuration types when a higher RS density is required in the frequency domain, and Type 2 is configured to a "dmrs-Type" which is one of two DMRS configuration types when more antenna ports are required. That is, there are two available DMRS configuration types, Type 1 and Type 2; Type 1 may be configured to "dmrs-Type" when a higher RS density is required in the frequency domain, and Type 2 may be configured to "dmrs-Type" when more antenna ports are required. As high data rate services and MU simultaneous transmission scenarios increase, DMRS ports require orthogonal DMRS ports of 12 or more than the existing configuration. In other words, as the high data rate services and the MU simultaneous transmission scenarios increase, 12 or more orthogonal DMRS ports, which are the existing DMRS port configuration, may be required.

In MU-MIMO uplink and downlink environments, more orthogonal DMRS ports may be required than the current Release-17 standard. Therefore, in a channel environment where an additional DMRS is not needed, the number of orthogonal DMRS ports may be increased up to a maximum of 24 ports by performing time division multiplexing (TDM) for additional DMRS symbols of the DMRS pattern in the related art in order to increase the number of ports. The advantage is that the increase in the number of ports may be implemented with the existing mapping type without increasing the overhead of the DMRS. The advantage is that the increase in the number of ports may be implemented with the existing mapping type without increasing the overhead of the DMRS. That is, in the channel environment where an additional DMRS is not needed, the number of orthogonal DMRS ports may be increased up to a maximum of 24 ports by configuring the TDM for the additional DMRS symbols of the DMRS pattern in the related art in order to increase the number of DMRS ports. There is an advantage in that by configuring the TDM for the additional DMRS symbols, it is possible to increase the number of orthogonal DMRS ports up to a maximum of 24 ports by using the existing mapping type without increasing the overhead of the DMRS.

The present disclosure, which proposes a method for increasing ports by applying the TDM to the mapping method of additional DMRS positions of existing configuration types 1 and 2, is capable of supporting up to 16 ports in type 1 and up to 24 ports in type 2, which is twice the number of ports supported compared to the existing types. That is, the present disclosure proposes a method for increasing the number of DMRS ports by applying the TDM to the additional DMRS position mapping method of the existing configuration types 1 and 2.

Table 19 below compares the number of DMRS ports in the legacy method according to the configuration type/the number of DMRS symbols and the number of DMRS ports in the TDM-applied method proposed by the present disclosure.

[Table 19]

|       | MU     | Single symbol          | Double symbol                    |
|-------|--------|------------------------|----------------------------------|
| Type1 | Legacy | 2 F-CDM X 2 FDM        | 2 F-CDM X 2 T-CDM X 2 FDM        |
|       | TDMed  | 2 F-CDM X 2 FDM x 2 TDM | 2 F-CDM X 2 T-CDM X 2 FDM x 2 TDM |
| Type2 | Legacy | 2 F-CDM X 3 FDM        | 2 F-CDM X 2 T-CDM X 3 FDM        |
|       | TDMed  | 2 F-CDM X 3 FDM x 2 TDM | 2 F-CDM X 2 T-CDM X 3 FDM x 2 TDM |

When the additional DMRS position is configured by the TDM, the number of ports is doubled, but when UEs 1 and 2 receive two or more DMRS symbols during simultaneous MU-MIMO operation, it is necessary to determine whether there is a DMRS or not, and each UE must decide which symbol to recognize as front loaded (FL). Therefore, TDM information is included in the dmrs-AdditionalPosition parameter and transmitted, and the FL DMRS and the additional DMRS are configured by the TDM. That is, in the case where UE 1 and UE 2 operate together in the MU-MIMO scenario, when UE 1 and UE 2 each receive two or more DMRS symbols, UE 1 and UE 2 each need to determine whether the two or more received DMRS symbols contain the DMRS, and UE 1 and UE 2 each need to determine which symbol among the symbols determined to contain the DMRS to recognize as front loaded (FL). Therefore, the TDM information is included in the dmrs-AdditionalPosition parameter and transmitted, and the FL DMRS and the additional DMRS are configured by the TDM. If there is no TDM information in the dmrs-AdditionalPosition parameter, the UE is designated as a legacy UE. Here, the TDM information may be information indicating whether the TDM is applied/configured between the FL DMRS and the additional DMRS when the UE receives two or more DMRS symbols. Alternatively, the BS may use other DCI/MAC-CE/RRC signaling besides the dmrs-AdditionalPosition parameter to indicate to the UE whether the TDM is applied, which DMRS among the DMRS symbols is the FL symbol, or whether DMRS is not transmitted.

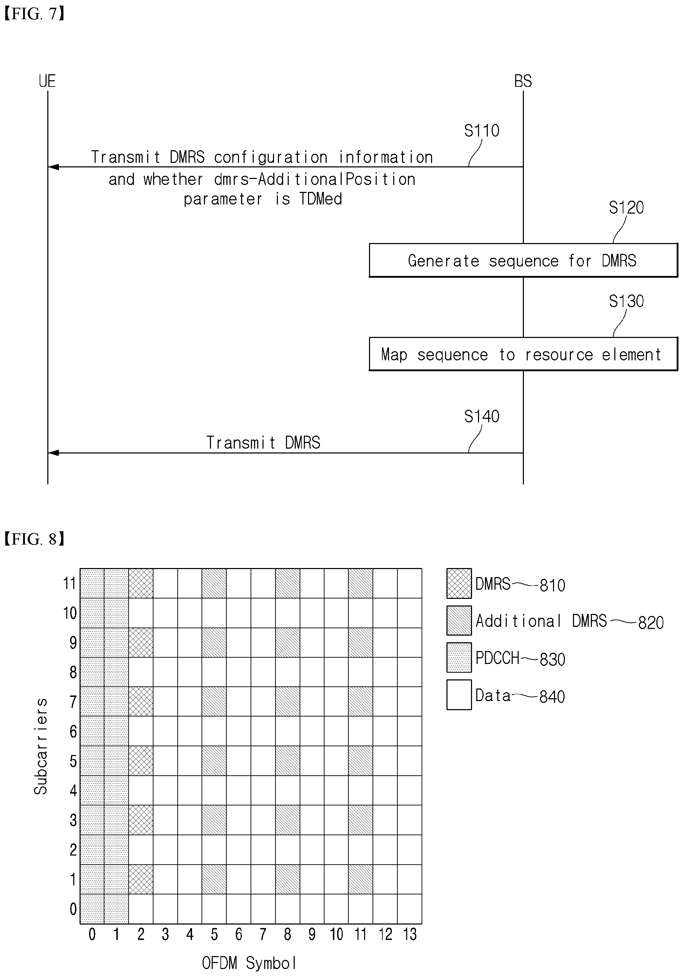

FIG. 7 is a flowchart showing an example of a method proposed by the present disclosure. FIG. 7 relates to a method for receiving, by the UE, TDM information, etc. from the UE. The BS transmits, to the UE, DMRS configuration information (S110). In this case, the DMRS configuration information may refer to DMRS-DownlinkConfig IE. The DMRS-DownlinkConfig IE may include parameter dmrs-Type, parameter dmrs-AdditionalPosition, parameter maxLength, parameter phaseTrackingRS, etc. The dmrs-Type parameter is a parameter for selecting DMRS type to be used for DL. When transmitting the dmrs-AdditionalPosition parameter, if the FL DMRS and the additional DMRS are TDMed, the UE is recognized by distinguishing the port. That is, when the BS transmits the dmrs-AdditionalPosition parameter, if the FL DMRS and the additional DMRS are TDMed, different ports may be associated with each of the TDMed symbols, and the BS may recognize the UEs associated with the different ports, respectively. Thereafter, the BS generates a sequence for the DMRS, maps the sequence to a resource element, and then transmits the DMRS to the UE (S120, S130, and S140).

FIG. 8 is a diagram illustrating an example of downlink DMRS transmission. FIG. 8 relates to DMRS configuration type 1, and as illustrated in FIG. 8, in DMRS configuration type 1, up to three additional DMRSs 820 are enabled to be configured, and in order to multiplex a location of a front loaded DMRS 810 of the CDM group 0 and a location of the additional DMRSs 820 in a TDM mode, TDM configuration/indication is required between DMRS signals. In FIG. 8, the case of CDM group 0 is illustrated as an example for convenience of description, but the same method may also be applied to the case of CDM group 1.

The legacy UE may receive the DMRS using both 1 FL symbol 810 and 3 additional symbols 820, but when UEs 1 and 2 are subject to MU-MIMO, it is necessary to configure how each of UEs 1 and 2 should interpret the DMRS symbols and whether the DMRS ports of UEs 1 and 2 are TDMed. That is, for two UEs (UE 1 and UE 2) performing an MU-MIMO operation, an interpretation method for one FL DMRS symbol 810 and three additional DMRS symbols 820, and the TDM mode of the DMRS ports associated with UE 1 and UE 2, respectively, must be configured/indicated to UE 1 and UE 2, respectively.

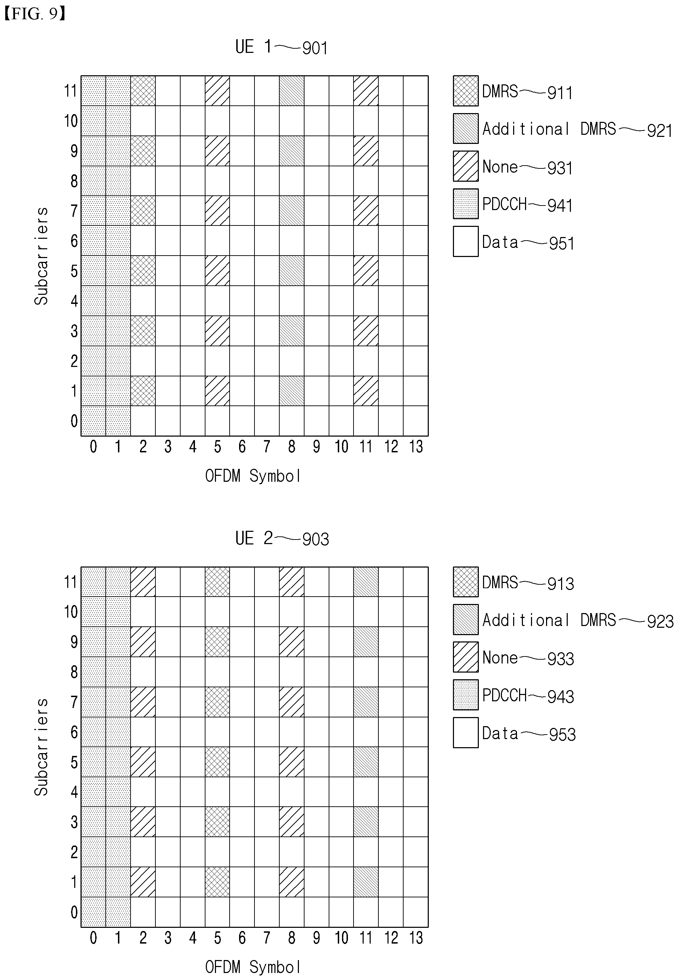

FIG. 9 is a diagram illustrating another example of the downlink DMRS transmission. FIG. 9 relates to DMRS configuration type 1; FIG. 9 relates to a case where two UEs perform the MU-MIMO operation, and one FL DMRS and three additional DMRSs are configured based on a legacy operation. In FIG. 9, when four DMRS symbols are referred to as symbols 1, 2, 3, and 4, UE 1 (901) must interpret symbol 1 = FL DMRS (911), symbol 2 = no DMRS (931), symbol 3 = additional DMRS (921), and symbol 4 = no DMRS (931), and UE 2 (903) must interpret symbol 1 = no DMRS (933), symbol 2 = FL DMRS (913), symbol 3 = no DMRS (933), and symbol 4 = additional DMRS (923) to enable four DMRS symbols to be TDMed. Extending upon this, in Configuration Type 1, when UE 1 (901) configures 1 FL symbol and 3 additional symbols, only symbol 1 = FL DMRS and symbol 3 = additional DMRS are reinterpreted as the DMRS symbols, and ports 0, 1, 2, and 3 are configured, which are constituted by the corresponding DMRS symbols (ports 0, 1, 2, and 3 are distinguished using FD OCC and FDM like the related art). In the case of ports 0 and 1, the DMRS is transmitted by using CDM group 0 as illustrated in FIG. 9. That is, when the DMRS is transmitted through ports 0 and 1, the DMRS is transmitted by using CDM group 0, and CDM group 1 may be used for data transmission. On the other hand, unlike this, in the case of ports 2 and 3, the DMRS may be transmitted by using CDM group 1, and CDM group 0 may be used for data transmission. That is, whether data is transmitted per resource element (RE) in the DMRS symbol may be indicated according to the CDM group without data indicated via a DCI like the related art.

On the other hand, when UE 902 (903) configures 1 FL symbol and 3 additional symbols, only symbol 2 = FL DMRS and symbol 4 = additional DMRS are reinterpreted as the DMRS symbols, and ports 4, 5, 6, and 7 are configured, which are constituted by the corresponding DMRS symbols (ports 4, 5, 6, and 7 are distinguished using the FD OCC and the FDM like the related art). In the case of ports 4 and 5, the DMRS is transmitted by using CDM group 0 as illustrated in FIG. 9. That is, when the DMRS is transmitted through ports 4 and 5, the DMRS is transmitted by using CDM group 0, and CDM group 1 may be used for data transmission. On the other hand, unlike this, in the case of ports 6 and 7, the DMRS may be transmitted by using CDM group 1, and CDM group 0 may be used for data transmission. That is, whether data is transmitted per RE in the DMRS symbol may be indicated according to the CDM group without data indicated via the DCI like the related art.

In FIG. 9, an example is described in which symbols 1 and 3 are allocated to UE 1 and symbols 2 and 4 are allocated to UE 2 when one FL DMRS and three additional DMRSs are configured, but besides, four DMRS symbols may be TDM-configured by various modes. More specifically, when four DMRS symbols are TDMed for two UEs, two symbols out of the four DMRS symbols are selected and allocated to UE 1, and the remaining two symbols are allocated to UE 2, so a total of 4C2 = 6 cases of TDM may be possible. That is, there may be a case where symbols 1 and 2 are allocated to UE 1 and symbols 3 and 4 are allocated to UE 2 (case 1), a case where symbols 1 and 3 are allocated to UE 1 and symbols 2 and 4 are allocated to UE 2 (case 2, a mode of FIG. 9), a case where symbols 1 and 4 are allocated to UE 1 and symbols 2 and 3 are allocated to UE 2 (case 3), a case where symbols 2 and 3 are allocated to UE 1 and symbols 1 and 4 are allocated to UE 2 (case 4), a case where symbols 2 and 4 are allocated to UE 1 and symbols 1 and 3 are allocated to UE 2 (case 5), and a case where symbols 3 and 4 are allocated to UE 1 and symbols 1 and 2 are allocated to UE 2 (case 6).

As described above, the number of orthogonal DMRS ports is doubled from four existing ports 0, 1, 2, and 3 to eight ports 0, 1, 2, 3, 4, 5, 6, and 7. That is, even though 1 FL symbol and 3 additional symbols are configured for the UE, a UE that is indicated with some/all of ports 0, 1, 2, and 3 may be interpreted as UE 1 (901), and a UE that is indicated with some/all of ports 4, 5, 6, and 7 may be interpreted as UE 2 (903). For example, if ports 0, 1, 2, and 3 are configured to UEs a, b, c, and d, respectively, and ports 4, 5, 6, and 7 are configured to UEs e, f, g, and h respectively, UEs a, b, c, and d interpret four DMRS symbols like UE 1 (901), and the DMRS ports between UEs a, b, c, and d are orthogonalized through the FD-OCC and the FDM, and UEs e, f, g, and h interpret four DMRS symbols like UE 2 (903), and the DMRS ports between UEs e, f, g, and h are orthogonalized through the FD-OCC and the FDM. For this operation, the BS must be able to indicate, to the UE, ports 4, 5, 6, and 7 in addition to the existing ports 0, 1, 2, and 3 when configuring type 1 DMRS, 1 FL DMRS symbol, and 3 additional DMRS symbols.

In the case of a double symbol of configuration type 1, the above mode may also be extended as it is to enable the TDM and TD OCC is enabled in addition to the FD OCC for each CDM group (0/1), which may double the number of ports. That is, in the case of the double symbol of configuration type 1, the above mode is applied, so the FD OCC is applied for each CDM group (0/1), and the TD OCC through the TDM is additionally applied, which may double the number of ports.

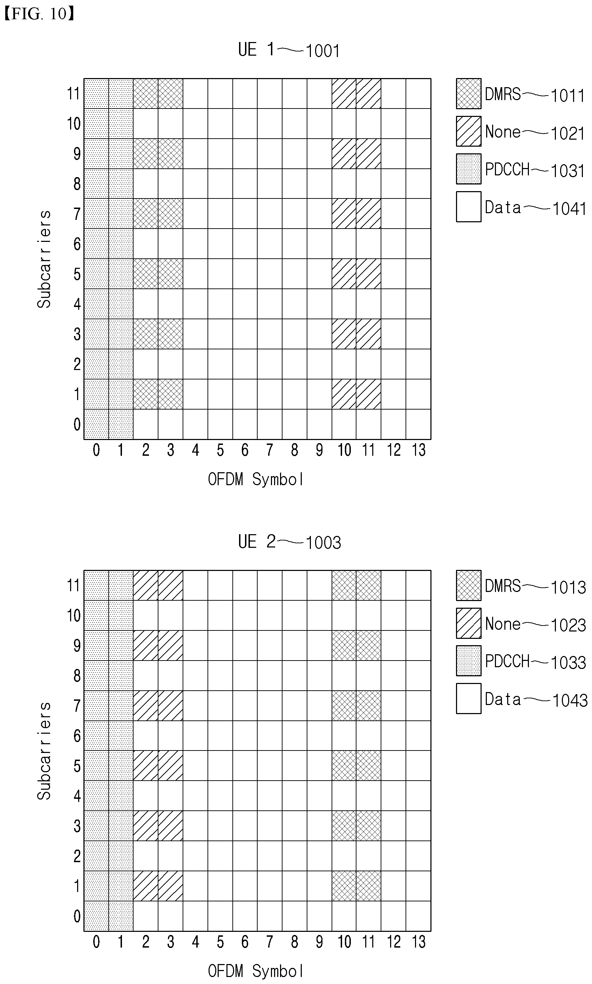

FIG. 10 is a diagram illustrating yet another example of the downlink DMRS transmission. FIG. 10 relates to a case of a double symbol of DMRS configuration type 1, and FIG. 10 relates to a case where two UEs perform the MU-MIMO operation and one double symbol FL DMRS and one double symbol additional DMRS are configured based on the legacy operation. In FIG. 10, when two DMRS double symbols are referred to as symbols 1 and 2, UE 1 (1001) must interpret symbol 1 = FL DMRS (1011) and symbol 2 = no DMRS (1021), and UE 2 (1003) must interpret symbol 1 = no DMRS (1023) and symbol 2 = FL DMRS (1013) to enable TDM. Extending upon this, in the case of the double symbols of Configuration Type 1, when UE 1 (1001) configures 1 FL symbol and 1 additional double symbol, only symbol 1 = FL DMRS is reinterpreted as the DMRS symbol, and ports 0, 1, 2, 3, 4, 5, 6, and 7 are configured, which are constituted by the corresponding DMRS symbols (ports 0, 1, 2, 3, 4, 5, 6, and 7 are distinguished using the FD OCC and the FDM like the related art). In the case of ports 0, 1, 2, and 3, the DMRS is transmitted using CDM group 0 as illustrated in FIG. 10. That is, when the DMRS is transmitted through ports 0, 1, 2, and 3, the DMRS may be transmitted by using CDM group 0, and CDM group 1 may be used for data transmission. On the other hand, unlike this, in the case of ports 4, 5, 6, and 7, the DMRS may be transmitted by using CDM group 1, and CDM group 0 may be used for data transmission. That is, whether data is transmitted per resource element (RE) in the DMRS symbol may be indicated according to the CDM group without data indicated via the DCI like the related art.

On the other hand, when UE 2 (1003) configures 1 FL double symbol and 1 additional double symbol, only symbol 2 = FL DMRS is reinterpreted as the DMRS symbol, and ports 8, 9, 10, 11, 12, 13, 14, and 15 are configured, which are constituted by the corresponding DMRS symbols (ports 8, 9, 10, 11, 12, 13, 14, and 15 are distinguished using the FD OCC and the FDM like the related art). In the case of ports 8, 9, 10, and 11, the DMRS is transmitted by using CDM group 0 as illustrated in FIG. 10. That is, when the DMRS is transmitted through ports 8, 9, 10, and 11, the DMRS may be transmitted by using CDM group 0, and CDM group 1 may be used for data transmission. On the other hand, unlike this, in the case of ports 12, 13, 14, and 15, the DMRS may be transmitted by using CDM group 1, and CDM group 0 may be used for data transmission. That is, whether data is transmitted per RE in the DMRS symbol may be indicated according to the CDM group without data indicated via the DCI like the related art.

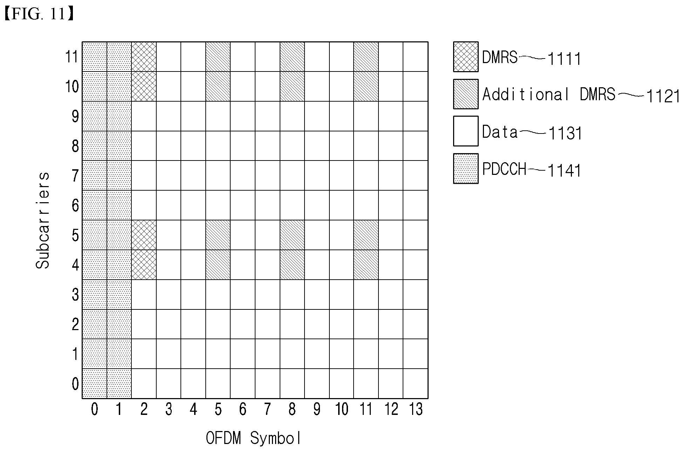

FIG. 11 is a diagram illustrating still yet another example of the downlink DMRS transmission. FIG. 11 relates to Configuration Type 2, and as also illustrated in Configuration Type 2, like Type 1, up to three additional DMRSs 1121 are enabled to be configured, and in order to multiplex a front loaded DMRS location 1111 of CDM group 0 and an additional DMRS 1121 in the TDM mode, TDM configuration/indication is required between DMRS signals. In FIG. 11, the case of CDM group 0 is illustrated as an example for convenience of description, but the same method may also be applied to a case of CDM group 1/2.

Even in Configuration Type 2, the legacy UE may receive the DMRS using both the FL symbol 1111 and 3 additional symbols 1121, but when UEs 1 and 2 are subject to MU-MIMO, it is necessary to configure how each of UEs 1 and 2 should interpret the DMRS symbols and whether the DMRS ports of UEs 1 and 2 are TDMed. That is, for two UEs (UE 1 and UE 2) performing an MU-MIMO operation, an interpretation method for one FL DMRS symbol 1111 and three additional DMRS symbols 1121, and the TDM mode of the DMRS ports associated with UE 1 and UE 2 respectively, must be configured/indicated to each of UE 1 and UE 2.

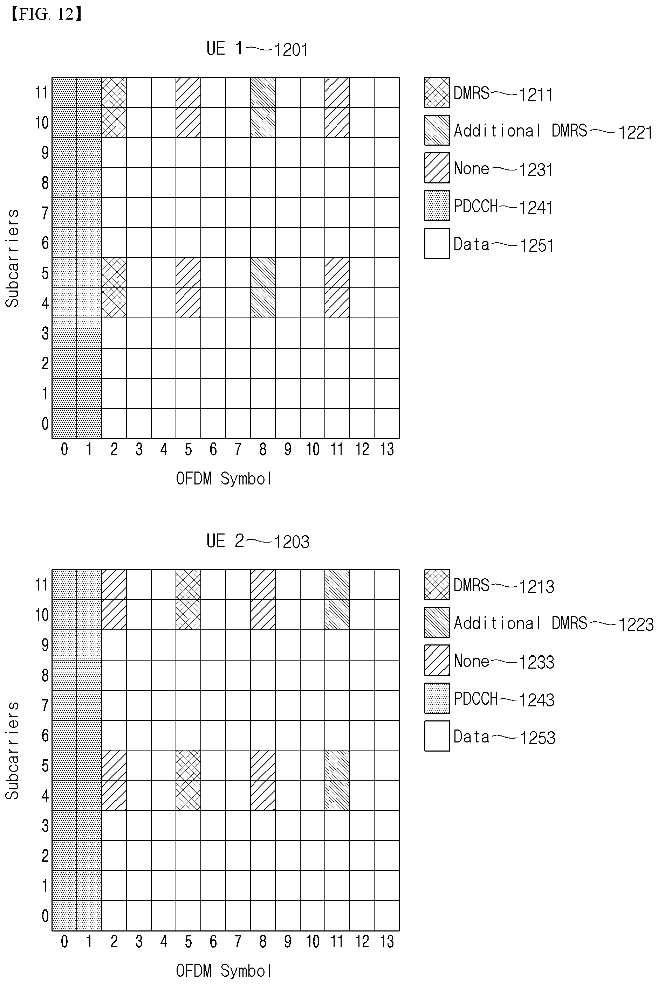

FIG. 12 is a diagram illustrating still yet another example of the downlink DMRS transmission. FIG. 12 relates to DMRS configuration type 2, and FIG. 12 relates to a case where two UEs perform the MU-MIMO operation and one FL DMRS and three additional DMRSs are configured based on the legacy operation.

Extending similarly to Configuration Type 1, when four FDMed DMRS symbols are referred to as symbols 1, 2, 3, and 4 as in FIG. 12, UE 1 (1201) must interpret symbol 1 = FL DMRS (1211), symbol 2 = no DMRS (1231), symbol 3 = additional DMRS (1221), and symbol 4 = no DMRS (1231), and UE 2 (1203) must interpret symbol 1 = no DMRS (1233), symbol 2 = FL DMRS (1213), symbol 3 = no DMRS (1233), and symbol 4 = additional DMRS (1223) to enable four DMRS symbols to be TDMed. Extending upon this, in Configuration Type 2, when UE 1 (1201) configures 1 FL symbol and 3 additional symbols, only symbol 1 = FL DMRS and symbol 3 = additional DMRS are reinterpreted as the DMRS symbols, and ports 0, 1, 2, 3, 4, and 5 are configured, which are constituted by the corresponding DMRS symbols (ports 0, 1, 2, 3, 4, and 5 are distinguished using FD OCC and FDM like the related art). In the case of ports 0 and 1, the DMRS is transmitted by using CDM group 0 as illustrated in FIG. 12. On the other hand, unlike this, the DMRS may be transmitted by using CDM group 1 in the case of ports 2 and 3, and by using CDM group 2 in the case of ports 4 and 5, so when the DMRS port is not a configured CDM group, the corresponding RE may be used for data transmission. That is, whether data is transmitted per RE in the DMRS symbol may be indicated according to the CDM group without data indicated via the DCI like the related art.

On the other hand, when UE 2 (1203) configures 1 FL symbol and 3 additional symbols, only symbol 2 = FL DMRS and symbol 4 = additional DMRS are reinterpreted as the DMRS symbols, and ports 6, 7 8, 9, 10, and 11 are configured, which are constituted by the corresponding DMRS symbols (ports 6, 7 8, 9, 10, and 11 are distinguished using the FD OCC and the FDM like the related art). In the case of ports 6 and 7, the DMRS is transmitted by using CDM group 0 as illustrated in FIG. 12. On the other hand, unlike this, the DMRS may be transmitted by using CDM group 1 in the case of ports 8 and 9, and by using CDM group 2 in the case of ports 10 and 11, so when the DMRS port is not the configured CDM group, the corresponding RE may be used for data transmission. That is, whether data is transmitted per RE in the DMRS symbol may be indicated according to the CDM group without data indicated via the DCI like the related art.

In FIG. 12, an example is described in which symbols 1 and 3 are allocated to UE 1 and symbols 2 and 4 are allocated to UE 2 when one FL DMRS and three additional DMRSs are configured, but besides, four DMRS symbols may be TDM-configured by various modes. More specifically, when four DMRS symbols may be TDMed for two UEs, two symbols out of the four DMRS symbols are selected and allocated to UE 1, and the remaining two symbols may allocated to UE 2, so a total of $4C2 = 6$ cases of TDM may be possible. That is, there may be a case where symbols 1 and 2 are allocated to UE 1 and symbols 3 and 4 are allocated to UE 2 (case 1), a case where symbols 1 and 3 are allocated to UE 1 and symbols 2 and 4 are allocated to UE 2 (case 2, a mode of FIG. 12), a case where symbols 1 and 4 are allocated to UE 1 and symbols 2 and 3 are allocated to UE 2 (case 3), a case where symbols 2 and 3 are allocated to UE 1 and symbols 1 and 4 are allocated to UE 2 (case 4), a case where symbols 2 and 4 are allocated to UE 1 and symbols 1 and 3 are allocated to UE 2 (case 5), and a case where symbols 3 and 4 are allocated to UE 1 and symbols 1 and 2 are allocated to UE 2 (case 6).

As described above, the number of orthogonal DMRS ports is doubled from 6 to 12. That is, even though 1 FL symbol and 3 additional symbols are configured to the UE, a UE that is indicated with some/all of ports 0, 1, 2, 3, 4, and 5 may be interpreted as UE 1 (1201), and a UE that is indicated with some/all of ports 6, 7, 8, 9, 10, and 11 may be interpreted as UE 2 (1203). For example, if ports 0, 1, 2, 3, 4, and 5 are configured to UEs a, b, c, d, e, and f, respectively, and ports 6, 7, 8, 9, 10, and 11 are configured to UEs g, h, i, j, k, and l, respectively, UEs a, b, c, d, e, and f interpret four DMRS symbols like UE 1 (1201), and the DMRS ports between UEs a, b, c, d, e, and f are orthogonalized through the FD-OCC and the FDM, UEs g ,h, i, j, k, and l interpret four DMRS symbols like UE 2 (1203), and the DMRS ports between UEs g ,h, i, j, k, and l are orthogonalized through the FD-OCC and the FDM. For this operation, the BS must be able to indicate to the UE ports 6, 7, 8, 9, 10, and 11 in addition to the existing ports 0, 1, 2, 3, 4, and 5 when configuring type 2 DMRS, 1 FL DMRS symbol, and 3 additional DMRS symbols.

In the case of a double symbol of configuration type 2, the above mode may also be extended as it is to enable the TDM and TD OCC is enabled in addition to the FD OCC for each CDM group 0/1/2, which may double the number of ports. That is, in the case of the double symbol of configuration type 2, the above mode is also applied, so the FD OCC is applied for each CDM group (0/1/2), and the TD OCC through the TDM is additionally applied, which may double the number of ports.

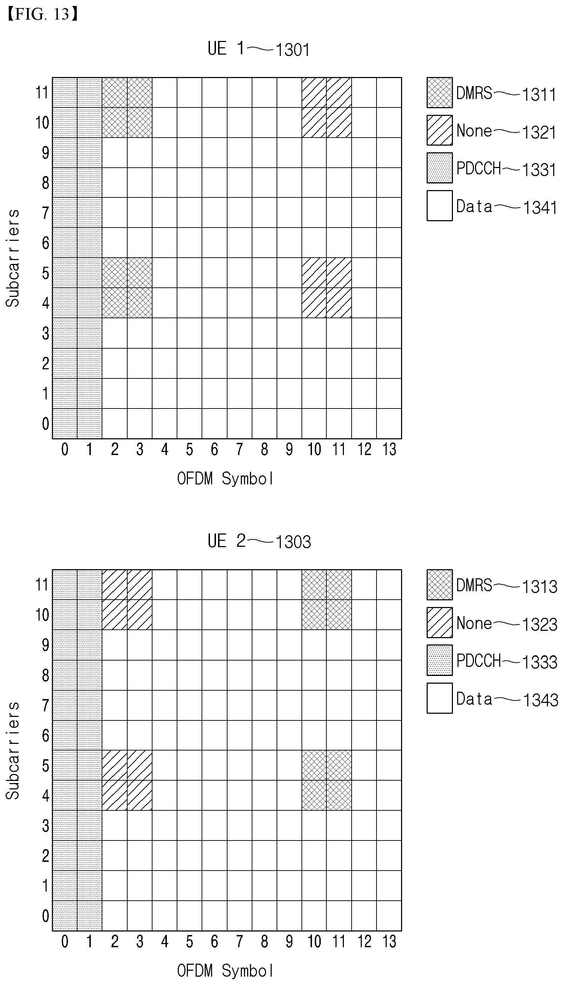

FIG. 13 is a diagram illustrating still yet another example of the downlink DMRS transmission. FIG. 13 relates to a case of the double symbol of DMRS configuration type 2, and FIG. 13 relates to a case where two UEs perform the MU-MIMO operation and one double symbol FL DMRS and one double symbol additional DMRS are configured based on the legacy operation. In FIG. 13, when two DMRS double symbols are referred to as symbols 1 and 2, UE 1 (1301) must interpret symbol 1 = FL DMRS (1311) and symbol 2 = no DMRS (1321), and UE 2 (1303) must interpret symbol 1 = no DMRS (1323) and symbol 2 = FL DMRS (1313) to enable TDM. Extending upon this, in the case of the double symbol of Configuration Type 2, when UE 1 (1301) configures 1 FL symbol and 1 additional double symbol, only symbol 1 = FL DMRS is reinterpreted as the DMRS symbol, and ports 0, 1, 2, 3, 4, 5, 6, 7, 8, 9, 10, and 11 are configured, which are constituted by the corresponding DMRS symbols (ports 0, 1, 2, 3, 4, 5, 6, 7, 8, 9, 10, and 11 are distinguished using the FD OCC and the FDM like the related art). In the case of ports 0, 1, 2, and 3, the DMRS is transmitted by using CDM group 0 as illustrated in FIG. 13. On the other hand, unlike this, the DMRS may be transmitted by using CDM group 1 in the case of ports 4, 5, 6, and 7, and by using CDM group 2 in the case of ports 8, 9, 10, and 11, so when the DMRS port is not the configured CDM group, the corresponding RE may be used for data transmission. That is, whether data is transmitted per RE in the DMRS symbol may be indicated according to the CDM group without data indicated via the DCI like the related art.

On the other hand, when UE 2 (1303) configures 1 FL double symbol and 1 additional double symbol, only symbol 2 = FL DMRS is reinterpreted as the DMRS symbol, and ports 12, 13, 14, 15, 16, 17, 18, 19, 20, 21, 22, and 23 are configured which are constituted by the corresponding DMRS symbols (ports 12, 13, 14, 15, 16, 17, 18, 19, 20, 21, 22, and 23 are distinguished using the FD OCC and the FDM like the related art). In the case of ports 12, 13, 14, and 15, the DMRS is transmitted by using CDM group 0 as illustrated in FIG. 13. On the other hand, unlike this, the DMRS may be transmitted by using CDM group 1 in the case of ports 16, 17, 18, and 19, and by using CDM group 2 in the case of ports 20, 21 ,22, and 23, so when the DMRS port is not a configured CDM group, the corresponding RE may be used for data transmission. That is, whether data is transmitted per RE in the DMRS symbol may be indicated according to the CDM group without data indicated via the DCI like the related art.

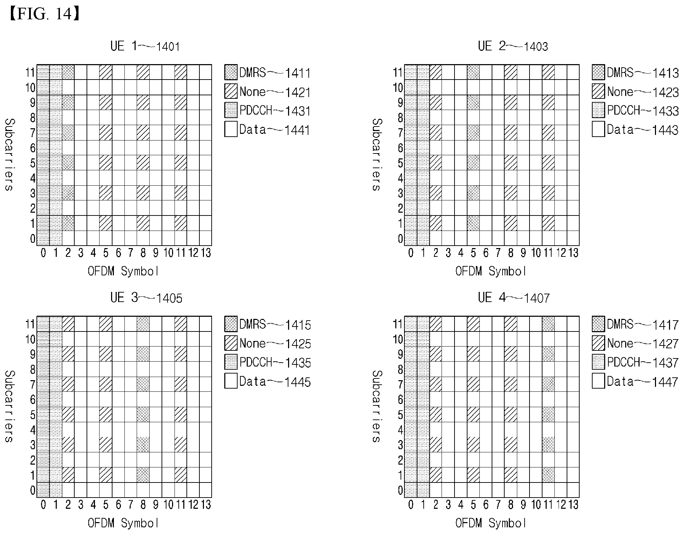

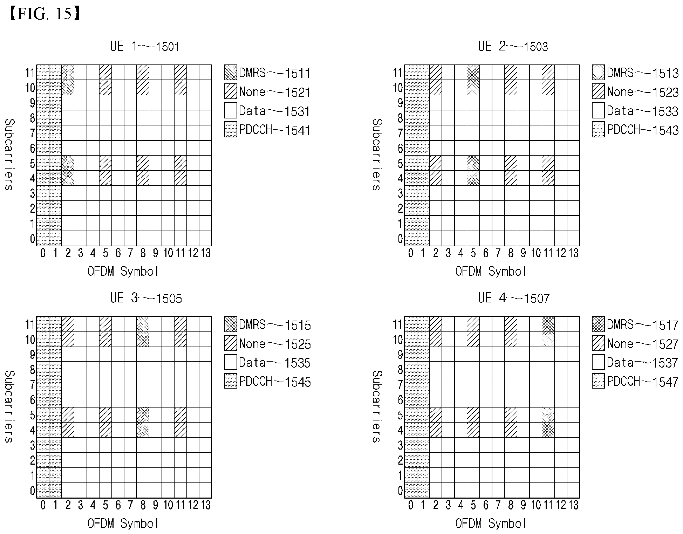

When more ports are needed in the MU situation, since the FL DMRS and 3 additional DMRSs are mapped, in the case of a single symbol of configuration types 1 & 2, 2 TDM is extended, which enables up to 4 times more DMRSs to be configured compared to the legacy number of ports as illustrated in FIGS. 14 and 15 through 4 TDM.

FIG. 14 is a diagram illustrating still yet another example of the downlink DMRS transmission. FIG. 14 relates to DMRS configuration type 1, and FIG. 14 relates to a case where four UEs perform the MU-MIMO operation and one FL DMRS and three additional DMRSs are configured based on the legacy operation. In FIG. 14, when four DMRS symbols are referred to as symbols 1, 2, 3, and 4, UE 1 (1401) must interpret symbol 1 = FL DMRS (1411), symbol 2 = no DMRS (1421), symbol 3 = no DMRS (1421), and symbol 4 = no DMRS (1421), UE 2 (1403) must interpret symbol 1 = no DMRS (1423), symbol 2 = FL DMRS (1413), symbol 3 = no DMRS (1423), and symbol 4 = additional DMRS (1423), UE 3(1405) must interpret symbol 1 = no DMRS (1425), symbol 2 = no DMRS (1425), symbol 3 = FL DMRS (1415), and symbol 4 = no DMRS (1425), and UE 4 (1407) must interpret symbol 1 = no DMRS (1427), symbol 2 = no DMRS (1427), symbol 3 = no DMRS (1427), and symbol 4 = FL DMRS (1417) to enable four DMRS symbols to be TDMed. Extending upon this, in Configuration Type 1, when UE 1 (1401) configures 1 FL symbol and 3 additional symbols, only symbol 1 = FL DMRS is reinterpreted as the DMRS symbol, and ports 0, 1, 2, and 3 are configured, which are constituted by the corresponding DMRS symbols (ports 0, 1, 2, and 3 are distinguished using FD OCC and FDM like the related art). In the case of ports 0 and 1, the DMRS is transmitted by using CDM group 0 as illustrated in FIG. 14. That is, when the DMRS is transmitted through ports 0 and 1, the DMRS may be transmitted by using CDM group 0, and CDM group 1 may be used for data transmission. On the other hand, unlike this, in the case of ports 2 and 3, the DMRS may be transmitted by using CDM group 1, and CDM group 0 may be used for data transmission. That is, whether data is transmitted per resource element (RE) in the DMRS symbol may be indicated according to the CDM group without data indicated via a DCI like the related art.

When UE 2 (1403) configures 1 FL symbol and 3 additional symbols, only symbol 2 = FL DMRS is reinterpreted as the DMRS symbol, and ports 4, 5, 6, and 7 are configured, which are constituted by the corresponding DMRS symbols (ports 4, 5, 6, and 7 are distinguished using the FD OCC and the FDM like the related art). In the case of ports 4 and 5, the DMRS is transmitted by using CDM group 0 as illustrated in FIG. 14. That is, when the DMRS is transmitted through ports 4 and 5, the DMRS may be transmitted by using CDM group 0, and CDM group 1 may be used for data transmission. On the other hand, unlike this, in the case of ports 6 and 7, the DMRS may be transmitted by using CDM group 1, CDM group 0 may be used for data transmission. That is, whether data is transmitted per RE in the DMRS symbol may be indicated according to the CDM group without data indicated via the DCI like the related art.

When UE 3 (1407) configures 1 FL symbol and 3 additional symbols, only symbol 3 = FL DMRS is reinterpreted as the DMRS symbol, and ports 8, 9, 10, and 11 are configured, which are constituted by the corresponding DMRS symbols (ports 8, 9, 10, and 11 are distinguished using the FD OCC and the FDM like the related art). In the case of ports 8 and 9, the DMRS is transmitted using CDM group 0 as illustrated in FIG. 14. That is, when the DMRS is transmitted through ports 8 and 9, the DMRS may be transmitted by using CDM group 0, and CDM group 1 may be used for data transmission. On the other hand, unlike this, in the case of ports 10 and 11, the DMRS may be transmitted by using CDM group 1, CDM group 0 may be used for data transmission. That is, whether data is transmitted per RE in the DMRS symbol may be indicated according to the CDM group without data indicated via the DCI like the related art.

When UE 4 (1405) configures 1 FL symbol and 3 additional symbols, only symbol 4 = FL DMRS is reinterpreted as the DMRS symbol, and ports 12, 13, 14, and 15 are configured, which are constituted by the corresponding DMRS symbols (ports 12, 13, 14, and 15 are distinguished using the FD OCC and the FDM like the related art). In the case of ports 12 and 13, the DMRS is transmitted by using CDM group 0 as illustrated in FIG. 14. That is, when the DMRS is transmitted through ports 12 and 13, the DMRS may be transmitted by using CDM group 0, and CDM group 1 may be used for data transmission. On the other hand, unlike this, in the case of ports 14 and 15, the DMRS may be transmitted by using CDM group 1, CDM group 0 may be used for data transmission. That is, whether data is transmitted per RE in the DMRS symbol may be indicated according to the CDM group without data indicated via the DCI like the related art.

FIG. 15 is a diagram illustrating still yet another example of the downlink DMRS transmission. FIG. 15 relates to DMRS configuration type 2, and FIG. 15 relates to a case where four UEs perform the MU-MIMO operation and one FL DMRS and three additional DMRSs are configured based on the legacy operation. In FIG. 15, when four DMRS symbols are referred to as symbols 1, 2, 3, and 4, UE 1 (1501) must interpret symbol 1 = FL DMRS (1511), symbol 2 = no DMRS (1521), symbol 3 = no DMRS (1521), and symbol 4 = no DMRS (1521), UE 2 (1503) must interpret symbol 1 = no DMRS (1523), symbol 2 = FL DMRS (1513), symbol 3 = no DMRS (1523), and symbol 4 = additional DMRS (1523), UE 3(1505) must interpret symbol 1 = no DMRS (1525), symbol 2 = no DMRS (1525), symbol 3 = FL DMRS (1515), and symbol 4 = no DMRS (1525), and UE 4 (1507) must interpret symbol 1 = no DMRS (1527), symbol 2 = no DMRS (1527), symbol 3 = no DMRS (1527), and symbol 4 = FL DMRS (1517) to enable four DMRS symbols to be TDMed. Extending upon this, in Configuration Type 2, when UE 1 (1501) configures 1 FL symbol and 3 additional symbols, only symbol 1 = FL DMRS is reinterpreted as the DMRS symbol, and ports 0, 1, 2, 3, 4, and 5 are configured, which are constituted by the corresponding DMRS symbols (ports 0, 1, 2, 3, 4, and 5 are distinguished using FD OCC and FDM like the related art). In the case of ports 0 and 1, the DMRS is transmitted by using CDM group 0 as illustrated in FIG. 15. On the other hand, unlike this, the DMRS may be transmitted by using CDM group 1 in the case of ports 2 and 3, and by using CDM group 2 in the case of ports 4 and 5, so when the DMRS port is not a configured CDM group, the corresponding RE may be used for data transmission. That is, whether data is transmitted per RE in the DMRS symbol may be indicated according to the CDM group without data indicated via the DCI like the related art.

When UE 2 (1503) configures 1 FL symbol and 3 additional symbols, only symbol 2 = FL DMRS is reinterpreted as the DMRS symbol, and ports 6, 7, 8, 9, 10, and 11 are configured, which are constituted by the corresponding DMRS symbols (ports 6, 7, 8, 9, 10, and 11 are distinguished using the FD OCC and the FDM like the related art). In the case of ports 6 and 7, the DMRS is transmitted by using CDM group 0 as illustrated in FIG. 15. On the other hand, unlike this, the DMRS may be transmitted by using CDM group 1 in the case of ports 8 and 9, and by using CDM group 2 in the case of ports 10 and 11, so when the DMRS port is not the configured CDM group, the corresponding RE may be used for data transmission. That is, whether data is transmitted per RE in the DMRS symbol may be indicated according to the CDM group without data indicated via the DCI like the related art.

When UE 3 (1505) configures 1 FL symbol and 3 additional symbols, only symbol 3 = FL DMRS is reinterpreted as the DMRS symbol, and ports 12, 13, 14, 15, 16, and 17 are configured, which are constituted by the corresponding DMRS symbols (ports 12, 13, 14, 15, 16, and 17 are distinguished using the FD OCC and the FDM like the related art). In the case of ports 12 and 13, the DMRS is transmitted by using CDM group 0 as illustrated in FIG. 15. On the other hand, unlike this, the DMRS may be transmitted by using CDM group 1 in the case of ports 14 and 15, and by using CDM group 2 in the case of ports 16 and 17, so when the DMRS port is not the configured CDM group, the corresponding RE may be used for data transmission. That is, whether data is transmitted per RE in the DMRS symbol may be indicated according to the CDM group without data indicated via the DCI like the related art.

When UE 4 (1507) configures 1 FL symbol and 3 additional symbols, only symbol 4 = FL DMRS is reinterpreted as the DMRS symbol, and ports 18, 19, 20, 21, 22, and 23 are configured, which are constituted by the corresponding DMRS symbols (ports 18, 19, 20, 21, 22, and 23 are distinguished using the FD OCC and the FDM like the related art). In the case of ports 18 and 19, the DMRS is transmitted by using CDM group 0 as illustrated in FIG. 15. On the other hand, unlike this, the DMRS may be transmitted by using CDM group 1 in the case of ports 20 and 21, and by using CDM group 2 in the case of ports 22 and 23, so when the DMRS port is not the configured CDM group, the corresponding RE may be used for data transmission. That is, whether data is transmitted per RE in the DMRS symbol may be indicated according to the CDM group without data indicated via the DCI like the related art.

Additionally, although in the above description, the case is described where two UEs perform the MU-MIMO operation or four UEs perform the MU-MIMO operation when one FL DMRS and three additional DMRSs are configured based on the single symbol DMRS legacy operation of configuration types 1 and 2, the method proposed by the present disclosure may be applied identically/similarly to other cases. For example, even when two UEs perform the MU-MIMO operation when one FL DMRS and one additional DMRS are configured based on the single symbol DMRS legacy operation of configuration types 1 and 2, the method proposed by the present disclosure may be applied to configure TDM for one FL DMRS and one additional DMRS, and as a result, MU-MIMO DMRS transmission and reception may be performed via 2 TDM. As another example, even when three UEs perform the MU-MIMO operation when one FL DMRS and two additional DMRSs are configured based on the single symbol DMRS legacy operation of configuration types 1 and 2, the method proposed by the present disclosure may be applied to configure TDM for one FL DMRS and two additional DMRSs, and as a result, MU-MIMO DMRS transmission and reception may be performed via 3 TDM.

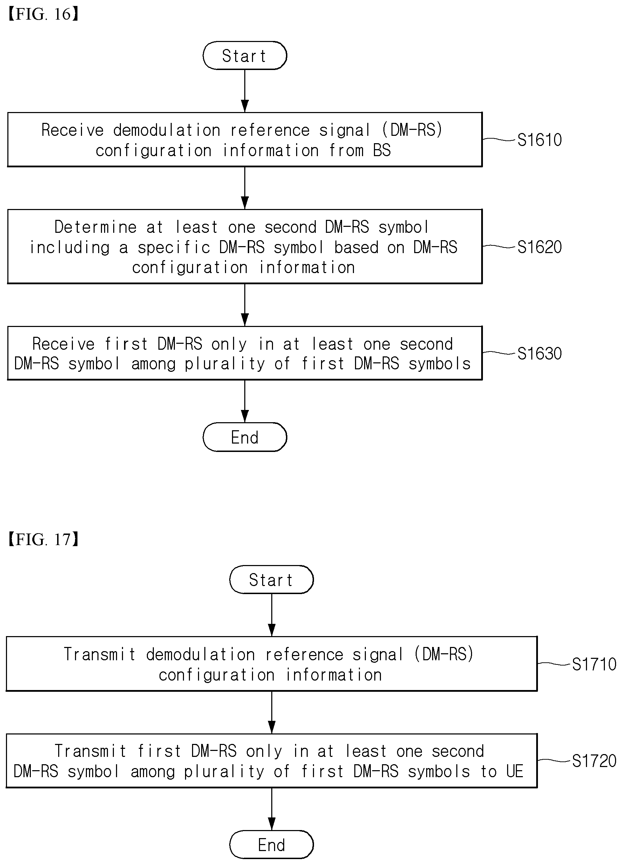

FIG. 16 is a flowchart showing an example in which a method proposed by the present disclosure is performed by a UE.

More specifically, the UE receives a demodulation reference signal (DM-RS) configuration information from a base station (BS) (S1610).

Here, the DM-RS configuration information includes (i) information related to a plurality of first DM-RS symbols including one first front-loaded (FL) DM-RS symbol and at least one first additional DM-RS symbol, (ii) information on whether time division multiplexing (TDM) is configured for the at least one first additional DM-RS symbol, and (iii) information on one specific DM-RS symbol among the plurality of first DM-RS symbols.

Thereafter, the UE determines at least one second DM-RS symbol including the specific DM-RS symbol based on the DM-RS configuration information (S1620).

Next, the UE receives a first DM-RS only in at least one second DM-RS symbol among the plurality of first DM-RS symbols from the BS (S1630).

Here, the first DM-RS is TDMed with a second DM-RS associated with third DM-RS symbols other than the at least one second DM-RS symbol among the plurality of first DM-RS symbols.

FIG. 17 is a flowchart showing an example in which the method proposed by the present disclosure is performed by a BS.

The BS transmits demodulation reference signal (DM-RS) configuration information to a user equipment (UE) (S1710).

Here, the DM-RS configuration information includes (i) information related to a plurality of first DM-RS symbols including one first front-loaded (FL) DM-RS symbol and at least one first additional DM-RS symbol, (ii) information on whether time division multiplexing (TDM) is configured for the at least one first additional DM-RS symbol, and (iii) information on one specific DM-RS symbol among the plurality of first DM-RS symbols.

Thereafter, the BS transmits a first DM-RS only in at least one second DM-RS symbol among the plurality of first DM-RS symbols to the UE (S1720).

Here, the at least one second DM-RS symbol includes the specific DM-RS symbol based on the DM-RS configuration information, and the first DM-RS is TDMed with a second DM-RS associated with third DM-RS symbols other than the at least one second DM-RS symbol among the plurality of first DM-RS symbols.

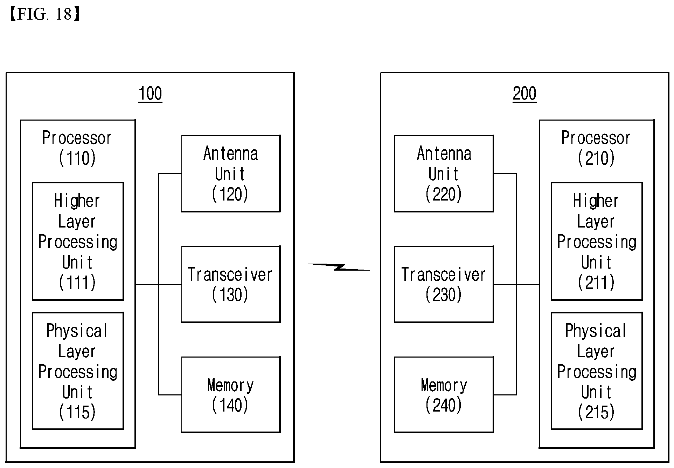

A device to which an embodiment of the present disclosure is applicable (a device implementing the method/operation according to an embodiment of the present disclosure) is described below with reference to FIG. 18.

FIG. 18 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Claims**

1. An operating method of a user equipment (UE) in a wireless communication system, the method comprising:

   receiving demodulation reference signal (DM-RS) configuration information from a base station (BS), wherein the DM-RS configuration information comprises (i) information related to a plurality of first DM-RS symbols including one first front-loaded (FL) DM-RS symbol and at least one first additional DM-RS symbol, (ii) information about whether time division multiplexing (TDM) is configured for the at least one first additional DM-RS symbol, and (iii) information about one specific DM-RS symbol from among the plurality of first DM-RS symbols;
   determining at least one second DM-RS symbol including the specific DM-RS symbol on the basis of the DM-RS configuration information; and
   receiving, from the BS, a first DM-RS only for the at least one second DM-RS symbol from among the plurality of first DM-RS symbols,
   wherein the first DM-RS is TDMed with a second DM-RS related to third DM-RS symbols other than the at least one second DM-RS symbol from among the plurality of first DM-RS symbols.

2. The method of claim 1, wherein the at least one second DM-RS symbol further includes one second additional DM-RS symbol different from the specific DM-RS symbol among the at least one first additional DM-RS symbol.

3. The method of claim 2, wherein the specific DM-RS symbol among the at least one second DM-RS symbol is an FL DM-RS symbol for the second additional DM-RS symbol.

4. The method of claim 2, wherein the second additional DM-RS symbol among the at least one second DM-RS symbol is an additional DM-RS symbol for the specific DM-RS symbol.

5. The method of claim 1, wherein the DM-RS configuration information is UE-specific information,

   the UE is configured to receive a DM-RS in a different DMRS symbol from at least one other UE serviced from the BS,
   the at least one other UE is configured to receive a DM-RS in at least one of the third DM-RS symbols from the BS, and
   the at least one second DM-RS symbol and the third DM-RS symbols are associated with different orthogonal DM-RS ports.

6. The method of claim 1, wherein the DMRS configuration information is received by a radio resource control (RRC) message, downlink control information (DCI), or a medium access control-control element (MAC-CE).

7. The method of claim 6, wherein the DM-RS configuration information further includes information of a DM-RS configuration type,

   when the DM-RS configuration type is configured to type 1, (i) the at least one second DM-RS symbol and (ii) at the third DM-RS symbols are associated with 4 or 8 orthogonal DM-RS ports, respectively, and
when the DM-RS configuration type is configured to type 2, (i) the at least one second DM-RS symbol and (ii) at the third DM-RS symbols are associated with 6 or 12 orthogonal DM-RS ports, respectively.

8. An operating method for a base station (BS) in a wireless communication system, the method comprising:

transmitting demodulation reference signal (DM-RS) configuration information from a user equipment (UE), wherein the DM-RS configuration information comprises (i) information related to a plurality of first DM-RS symbols including one first front-loaded (FL) DM-RS symbol and at least one first additional DM-RS symbol, (ii) information about whether time division multiplexing (TDM) is configured for the at least one first additional DM-RS symbol, and (iii) information about one specific DM-RS symbol from among the plurality of first DM-RS symbols; and
transmitting, to the UE, a first DM-RS only in at least one second DM-RS symbol from among the plurality of first DM-RS symbols,
wherein the at least one second DM-RS symbol includes the specific DM-RS symbol based on the DM-RS configuration information, and
wherein the first DM-RS is TDMed with a second DM-RS related to third DM-RS symbols other than the at least one second DM-RS symbol from among the plurality of first DM-RS symbols.

9. The method of claim 8, wherein the at least one second DM-RS symbol further includes one second additional DM-RS symbol different from the specific DM-RS symbol among the at least one first additional DM-RS symbol.

10. The method of claim 9, wherein the specific DM-RS symbol among the at least one second DM-RS symbol is an FL DM-RS symbol for the second additional DM-RS symbol.

11. The method of claim 9, wherein the second additional DM-RS symbol among the at least one second DM-RS symbol is an additional DM-RS symbol for the specific DM-RS symbol.

12. The method of claim 8, wherein the DM-RS configuration information is UE-specific information,

the UE is configured to receive a DM-RS in a different DMRS symbol from at least one other terminal serviced from the BS,
the at least one other UE is configured to receive a DM-RS in at least one of the third DM-RS symbols from the BS, and
the at least one second DM-RS symbol and the third DM-RS symbols are associated with different orthogonal DM-RS ports.

13. The method of claim 8, wherein the DMRS configuration information is transmitted by a radio resource control (RRC) message, downlink control information (DCI), or a medium access control-control element (MAC-CE).

14. The method of claim 13, wherein the DM-RS configuration information further includes information of a DM-RS configuration type,

when the DM-RS configuration type is configured to type 1, (i) the at least one second DM-RS symbol and (ii) at the third DM-RS symbols are associated with 4 or 8 orthogonal DM-RS ports, respectively, and
when the DM-RS configuration type is configured to type 2, (i) the at least one second DM-RS symbol and (ii) at the third DM-RS symbols are associated with 6 or 12 orthogonal DM-RS ports, respectively.

15. A user equipment (UE) in a wireless communication system, the UE comprising:

a transceiver;
at least one processor; and
at least one memory operably connectable to the at least one processor, and storing instructions of performing operations when executed by the at least one processor,
wherein the operations include all steps of the method of any one of claims 1 to 7.

16. A base station (BS) in a wireless communication system, the BS comprising:

a transceiver;

at least one processor; and

at least one memory operably connectable to the at least one processor, and storing instructions of performing operations when executed by the at least one processor,

wherein the operations include all steps of the method of any one of claims 8 to 14.

17. A control device of controlling a user equipment (UE) in a wireless communication system, the control device comprising:

at least one processor; and

at least one memory operably accessing the at least one processor,

wherein the at least one memory stores instructions for performing operations based on being executed by the at least one processor, and

wherein the operations include all steps of the method of any one of claims 1 to 7.

18. A control device of controlling a base station (BS) in a wireless communication system, the control device comprising:

at least one processor; and

at least one memory operably accessing the at least one processor,

wherein the at least one memory stores instructions for performing operations based on being executed by the at least one processor, and

wherein the operations include all steps of the method of any one of claims 8 to 14.

19. One or more non-transitory computer readable media storing one or more instructions, wherein the one or more instructions perform operations based on being executed by one or more processors, and

wherein the operations include all steps of the method of any one of claims 1 to 7.

20. One or more non-transitory computer readable media storing one or more instructions, wherein

the one or more instructions perform operations based on being executed by one or more processors, and

wherein the operations include all steps of the method of any one of claims 8 to 14.

【FIG. 1】

【FIG. 2】

【FIG. 3】

Radio Frame 10ms

Subframe 1ms

| 0 | 1 | 2 | 3 | 4 | 5 | 6 | 7 | 8 | 9 |

Fixed Size

Subframe ={1, 2, 4} Slots

Slot

| 0 | 1 | 2 | 3 |

Slot={7, 14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2, 4, 7} Symbols - ffs

【FIG. 4】

【FIG. 5】

Antenna port A ⎱
Antenna port B ⎰ Numerology X

Antenna port A ⎱
Antenna port B ⎰ Numerology Y

【FIG. 6】

|  | SYSTEM |  |  |
| INITIAL CELL | INFORMATION |  |  |
| SEARCH | RECEPTION | RANDOM ACCESS PROCEDURE | GENERAL DL/UL Tx/Rx |

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S601　　S602　　S603　S604　　S605　S606　　S607　S608

· DL/UL ACK/NACK
· UE CQI/PMI RI REPORT
　USING PUSCH AND PUCCH

【FIG. 7】

【FIG. 8】

【FIG. 9】

UE 1 ～ 901

DMRS ～ 911
Additional DMRS ～ 921
None ～ 931
PDCCH ～ 941
Data ～ 951

UE 2 ～ 903

DMRS ～ 913
Additional DMRS ～ 923
None ～ 933
PDCCH ～ 943
Data ～ 953

【FIG. 10】

UE 1—1001

UE 2—1003

【FIG. 11】

【FIG. 12】

UE 1 〜 1201

DMRS 〜 1211
Additional DMRS 〜 1221
None 〜 1231
PDCCH 〜 1241
Data 〜 1251

UE 2 〜 1203

DMRS 〜 1213
Additional DMRS 〜 1223
None 〜 1233
PDCCH 〜 1243
Data 〜 1253

【FIG. 13】

UE 1～1301

DMRS～1311
None～1321
PDCCH～1331
Data～1341

Subcarriers

OFDM Symbol

UE 2～1303

DMRS～1313
None～1323
PDCCH～1333
Data～1343

Subcarriers

OFDM Symbol

【FIG. 14】

UE 1～1401

DMRS～1411
None～1421
PDCCH～1431
Data～1441

UE 2～1403

DMRS～1413
None～1423
PDCCH～1433
Data～1443

UE 3～1405

DMRS～1415
None～1425
PDCCH～1435
Data～1445

UE 4～1407

DMRS～1417
None～1427
PDCCH～1437
Data～1447

【FIG. 15】

UE 1～1501

DMRS～1511
None～1521
Data～1531
PDCCH～1541

UE 2～1503

DMRS～1513
None～1523
Data～1533
PDCCH～1543

UE 3～1505

DMRS～1515
None～1525
Data～1535
PDCCH～1545

UE 4～1507

DMRS～1517
None～1527
Data～1537
PDCCH～1547

【FIG. 16】

```
                    ( Start )
                        │
                        ▼
┌──────────────────────────────────────────────┐
│  Receive demodulation reference signal (DM-RS)  │── S1610
│        configuration information from BS         │
└──────────────────────────────────────────────┘
                        │
                        ▼
┌──────────────────────────────────────────────┐
│    Determine at least one second DM-RS symbol    │
│  including a specific DM-RS symbol based on DM-RS │── S1620
│             configuration information            │
└──────────────────────────────────────────────┘
                        │
                        ▼
┌──────────────────────────────────────────────┐
│     Receive first DM-RS only in at least one     │
│  second DM-RS symbol among plurality of first    │── S1630
│                 DM-RS symbols                    │
└──────────────────────────────────────────────┘
                        │
                        ▼
                     ( End )
```

【FIG. 17】

```
                    ( Start )
                        │
                        ▼
┌──────────────────────────────────────────────┐
│   Transmit demodulation reference signal (DM-RS)  │── S1710
│           configuration information              │
└──────────────────────────────────────────────┘
                        │
                        ▼
┌──────────────────────────────────────────────┐
│     Transmit first DM-RS only in at least one    │
│  DM-RS symbol among plurality of first DM-RS     │── S1720
│              symbols to UE                        │
└──────────────────────────────────────────────┘
                        │
                        ▼
                     ( End )
```

【FIG. 18】

| | |
|---|---|
| **INTERNATIONAL SEARCH REPORT** | International application No. |
| | **PCT/KR2023/005443** |

**A. CLASSIFICATION OF SUBJECT MATTER**

**H04L 5/00**(2006.01)i; **H04B 7/0452**(2017.01)i; **H04W 72/23**(2023.01)i

According to International Patent Classification (IPC) or to both national classification and IPC

**B. FIELDS SEARCHED**

Minimum documentation searched (classification system followed by classification symbols)

H04L 5/00(2006.01); H04L 1/00(2006.01); H04L 27/26(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DM-RS(demodulation reference signal), 설정 정보(configuration information), TDM(time division multiplexing), 프론트 로디드(front-loaded)

**C. DOCUMENTS CONSIDERED TO BE RELEVANT**

| Category* | Citation of document, with indication, where appropriate, of the relevant passages | Relevant to claim No. |
|---|---|---|
| A | EP 3584975 A1 (HUAWEI TECHNOLOGIES CO., LTD.) 25 December 2019 (2019-12-25)<br>See paragraphs [0156]-[0159]; claim 1; and figure 6. | 1-20 |
| A | US 2021-0297220 A1 (LG ELECTRONICS INC.) 23 September 2021 (2021-09-23)<br>See paragraphs [0218]-[0221]; claim 1; and figure 15. | 1-20 |
| A | US 2013-0039332 A1 (NAYEB NAZAR, Shahrokh et al.) 14 February 2013 (2013-02-14)<br>See paragraphs [0101]-[0104]; claim 1; and figure 10. | 1-20 |
| A | US 2019-0013916 A1 (CHINA MOBILE COMMUNICATIONS GROUP CO., LTD.) 10 January 2019 (2019-01-10)<br>See paragraphs [0247]-[0251]; claim 1; and figure 9. | 1-20 |
| A | WO 2019-203609 A1 (LG ELECTRONICS INC.) 24 October 2019 (2019-10-24)<br>See paragraphs [0175]-[0184]; claim 1; and figure 22. | 1-20 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2023** | **24 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 513 812 A1

| INTERNATIONAL SEARCH REPORT<br>Information on patent family members | | International application No.<br>**PCT/KR2023/005443** | |
|---|---|---|---|

| Patent document<br>cited in search report | Publication date<br>(day/month/year) | Patent family member(s) | | Publication date<br>(day/month/year) |
|---|---|---|---|---|
| EP 3584975 A1 | 25 December 2019 | BR 112019020884 | A2 | 28 April 2020 |
| | | CN 108809609 | A | 13 November 2018 |
| | | CN 108809609 | B | 09 July 2019 |
| | | CN 109391456 | A | 26 February 2019 |
| | | CN 109391456 | B | 15 February 2022 |
| | | CN 109995498 | A | 09 July 2019 |
| | | CN 109995498 | B | 10 March 2020 |
| | | CN 109995499 | A | 09 July 2019 |
| | | CN 109995499 | B | 03 April 2020 |
| | | EP 3584975 | A4 | 16 September 2020 |
| | | EP 3584975 | B1 | 22 February 2023 |
| | | EP 4145748 | A1 | 08 March 2023 |
| | | JP 2020-517129 | A | 11 June 2020 |
| | | JP 6943355 | B2 | 29 September 2021 |
| | | KR 10-2019-0110618 | A | 30 September 2019 |
| | | KR 10-2276142 | B1 | 12 July 2021 |
| | | US 10715300 | B2 | 14 July 2020 |
| | | US 11424898 | B2 | 23 August 2022 |
| | | US 2019-0342062 | A1 | 07 November 2019 |
| | | US 2020-0336275 | A1 | 22 October 2020 |
| | | US 2023-0030162 | A1 | 02 February 2023 |
| | | WO 2019-029329 | A1 | 14 February 2019 |
| US 2021-0297220 A1 | 23 September 2021 | CN 110679111 | A | 10 January 2020 |
| | | CN 110679111 | B | 01 July 2022 |
| | | CN 110754056 | A | 04 February 2020 |
| | | CN 110754056 | B | 22 April 2022 |
| | | EP 3605927 | A1 | 05 February 2020 |
| | | EP 3605927 | A4 | 23 December 2020 |
| | | EP 3605927 | B1 | 02 November 2022 |
| | | EP 3651398 | A1 | 13 May 2020 |
| | | EP 3651398 | A4 | 16 December 2020 |
| | | JP 2020-512784 | A | 23 April 2020 |
| | | JP 2020-516155 | A | 28 May 2020 |
| | | JP 6888116 | B2 | 16 June 2021 |
| | | JP 7079262 | B2 | 01 June 2022 |
| | | KR 10-2019-0120370 | A | 23 October 2019 |
| | | KR 10-2019-0120371 | A | 23 October 2019 |
| | | KR 10-2312230 | B1 | 14 October 2021 |
| | | KR 10-2327640 | B1 | 17 November 2021 |
| | | US 11057177 | B2 | 06 July 2021 |
| | | US 11108517 | B2 | 31 August 2021 |
| | | US 11677526 | B2 | 13 June 2023 |
| | | US 2020-0028647 | A1 | 23 January 2020 |
| | | US 2021-0105110 | A1 | 08 April 2021 |
| | | WO 2018-182150 | A1 | 04 October 2018 |
| | | WO 2018-182358 | A1 | 04 October 2018 |
| US 2013-0039332 A1 | 14 February 2013 | CN 103733539 | A | 16 April 2014 |
| | | CN 106850018 | A | 13 June 2017 |
| | | CN 106850018 | B | 09 April 2021 |
| | | CN 113114441 | A | 13 July 2021 |

Form PCT/ISA/210 (patent family annex) (July 2022)

**INTERNATIONAL SEARCH REPORT**
Information on patent family members

International application No.

**PCT/KR2023/005443**

| Patent document cited in search report | | | Publication date (day/month/year) | Patent family member(s) | | | Publication date (day/month/year) |
|---|---|---|---|---|---|---|---|
| | | | | EP | 2742605 | A2 | 18 June 2014 |
| | | | | EP | 3261265 | A1 | 27 December 2017 |
| | | | | EP | 3958472 | A1 | 23 February 2022 |
| | | | | JP | 2014-529227 | A | 30 October 2014 |
| | | | | JP | 2017-085606 | A | 18 May 2017 |
| | | | | JP | 6060161 | B2 | 11 January 2017 |
| | | | | JP | 6286519 | B2 | 28 February 2018 |
| | | | | KR | 10-1926900 | B1 | 07 December 2018 |
| | | | | KR | 10-2014-0056334 | A | 09 May 2014 |
| | | | | SG | 2014012181 | A | 29 May 2014 |
| | | | | TW | 201322672 | A | 01 June 2013 |
| | | | | TW | 201728104 | A | 01 August 2017 |
| | | | | TW | I599191 | B | 11 September 2017 |
| | | | | US | 10355759 | B2 | 16 July 2019 |
| | | | | US | 2017-093469 | A1 | 30 March 2017 |
| | | | | US | 2019-341977 | A1 | 07 November 2019 |
| | | | | US | 9548802 | B2 | 17 January 2017 |
| | | | | WO | 2013-025486 | A2 | 21 February 2013 |
| | | | | WO | 2013-025486 | A3 | 25 April 2013 |
| US | 2019-0013916 | A1 | 10 January 2019 | CN | 106470087 | A | 01 March 2017 |
| | | | | CN | 106470087 | B | 26 June 2020 |
| | | | | EP | 3340515 | A1 | 27 June 2018 |
| | | | | EP | 3340515 | A4 | 12 September 2018 |
| | | | | EP | 3340515 | B1 | 09 October 2019 |
| | | | | US | 10715293 | B2 | 14 July 2020 |
| | | | | WO | 2017-028750 | A1 | 23 February 2017 |
| WO | 2019-203609 | A1 | 24 October 2019 | | None | | |